(19) Europäisches Patentamt / European Patent Office / Office européen des brevets

(11) **EP 3 995 858 A1**

(12) **EUROPEAN PATENT APPLICATION**
published in accordance with Art. 153(4) EPC

(43) Date of publication:
**11.05.2022 Bulletin 2022/19**

(21) Application number: **19936982.8**

(22) Date of filing: **05.07.2019**

(51) International Patent Classification (IPC):
*G01S 17/89* (2020.01)     *G01S 17/32* (2020.01)

(52) Cooperative Patent Classification (CPC):
**G01S 17/32; G01S 17/89**

(86) International application number:
**PCT/JP2019/026866**

(87) International publication number:
**WO 2021/005659 (14.01.2021 Gazette 2021/02)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Nuvoton Technology Corporation Japan**
**Nagaokakyo City**
**Kyoto 617-8520 (JP)**

(72) Inventors:
• **OKUYAMA, Tetsuro**
  **Kyoto 6178520 (JP)**
• **KAWAI, Yoshinao**
  **Nagaokakyo-shi, Kyoto 6178520 (JP)**

(74) Representative: **Appelt, Christian W.**
**Boehmert & Boehmert**
**Anwaltspartnerschaft mbB**
**Pettenkoferstrasse 22**
**80336 München (DE)**

(54) **INFORMATION PROCESSING SYSTEM, SENSOR SYSTEM, INFORMATION PROCESSING METHOD, AND PROGRAM**

(57)     An information processing system (1) is applied for an image sensor having a first pixel and a second pixel. The information processing system (1) includes a first acquirer (11), a second acquirer (12) and a third acquirer (13). The first pixel has sensitivity for visible light. The second pixel has sensitivity for infrared light. The first acquirer (11) is configured to acquire first brightness information (D1) from the first pixel. The first brightness information (D1) relates to a pixel value of the first pixel. The second acquirer (12) is configured to acquire second brightness information (D2) from the second pixel. The second brightness information (D2) relates to a pixel value of the second pixel. The third acquirer (13) is configured to acquire distance information (D3) from the second pixel. The distance information (D3) relates to a distance between the image sensor and an object by which the infrared light is reflected.

FIG. 2

EP 3 995 858 A1

**Description**

**Technical Field**

The present disclosure generally relates to information processing systems, sensor systems, information processing methods and programs, and more particularly relates to an information processing system to be applied for an image sensor, a sensor system, an information processing method, and a program.

**Background Art**

Patent Literature 1 discloses using an image mapping method in a measuring system.

The image mapping method includes acquiring a three dimensional point cloud data for a measuring target, using a laser scanner, and acquiring a two dimensional color image by capturing an image of the measuring target. The image mapping method further includes selecting any three or more points on the two dimensional color image, and giving each of the selected points three dimensional position information based on the three dimensional point cloud data. The image mapping method further includes calculating a relative positional relationship between the camera upon capturing the image of the measuring target and the laser scanner, based on the three dimensional position information of the selected points. The image mapping method further includes associating image data of the color image with data of each point of the point cloud data, based on the calculated relative positional relationship and the three dimensional position information of the selected points. The measuring system can obtain the three dimensional point cloud data to which color information is added by the processing as described above.

**Citation List**

**Patent Literature**

Patent Literature 1: JP 2005-77385 A

**Summary of Invention**

As described above, the method includes associating the image (brightness information) captured by the camera with the data (distance information) obtained by the laser scanner, but temporal and spatial gaps may occur between the brightness information and the distance information with high probability. Accordingly, it is not easy to improve the accuracy in the information processing based on the brightness information and the distance information.

It is therefore an object of the present disclosure to provide an information processing system, a sensor system, an information processing method, and a program, which can realize improving the accuracy in the information processing.

An information processing system according to an aspect of the present disclosure is applied for an image sensor having a first pixel and a second pixel. The information processing system includes a first acquirer, a second acquirer and a third acquirer. The first pixel has sensitivity for visible light. The second pixel has sensitivity for infrared light. The first acquirer is configured to acquire first brightness information from the first pixel. The first brightness information relates to a pixel value of the first pixel. The second acquirer is configured to acquire second brightness information from the second pixel. The second brightness information relates to a pixel value of the second pixel. The third acquirer is configured to acquire distance information from the second pixel. The distance information relates to a distance between the image sensor and an object by which the infrared light is reflected.

A sensor system according to an aspect of the present disclosure includes the information processing system and the image sensor.

An information processing method according to an aspect of the present disclosure is a method to process information to be received from an image sensor having a first pixel and a second pixel. The information processing method includes a first acquisition processing, a second acquisition processing and a third acquisition processing. The first pixel has sensitivity for visible light. The second pixel has sensitivity for infrared light. The first acquisition processing includes acquiring first brightness information from the first pixel. The first brightness information relates to a pixel value of the first pixel. The second acquisition processing includes acquiring second brightness information from the second pixel. The second brightness information relates to a pixel value of the second pixel. The third acquisition processing includes acquiring distance information from the second pixel. The distance information relates to a distance between the image sensor and an object by which the infrared light is reflected.

A program according to an aspect of the present disclosure is designed to cause one or more processors to execute the information processing method.

**Brief Description of Drawings**

FIG. 1A is a schematic block diagram illustrating configurations of an information processing system and a sensor system according to a first embodiment;

FIG. 1B is a schematic drawing illustrating a configuration of an image sensor to be applied for the information processing system;

FIG. 2 is a schematic block diagram illustrating the configuration of the information processing system;

FIG. 3 is a flowchart showing an operational example about how the information processing system operates;

FIG. 4 is an explanatory drawing showing an overview of operation in a parking space detection mode of the information processing system;

FIG. 5 is an explanatory drawing schematically showing an information processing result in the parking space detection mode of the information processing system;

FIG. 6 is an explanatory drawing showing an overview of operation in an object detection mode of the information processing system;

FIG. 7 is an explanatory drawing schematically showing an information processing result in the object detection mode of the information processing system;

FIG. 8A is an explanatory drawing showing a state where the information processing system is applied;

FIG. 8B is an explanatory drawing schematically showing how a detection result of a 3D object detection processing is corrected by a composition processing of the information processing system;

FIG. 9 is a schematic block diagram illustrating a configuration of an information processing system according to a third variation of the first embodiment;

FIG. 10 is a schematic block diagram illustrating a configuration of an information processing system according to a fourth variation of the first embodiment;

FIG. 11 is a schematic block diagram illustrating a configuration of an information processing system according to a fifth variation of the first embodiment;

FIG. 12A is a schematic drawing illustrating a configuration of an image sensor according to a variation of the first embodiment;

FIG. 12B is a schematic drawing illustrating a configuration of an image sensor according to another variation of the first embodiment;

FIG. 12C is a schematic drawing illustrating a configuration of an image sensor according to yet another variation of the first embodiment;

FIG. 12D is a schematic drawing illustrating a configuration of an image sensor according to yet another variation of the first embodiment;

FIG. 12E is a schematic drawing illustrating a configuration of an image sensor according to yet another variation of the first embodiment;

FIG. 13 is a schematic block diagram illustrating a configuration of an information processing system according to a second embodiment; and

FIG. 14 is a schematic block diagram illustrating a configuration of an information processing system according to a variation of the second embodiment.

**Description of Embodiments**

(First Embodiment)

(1) Overview

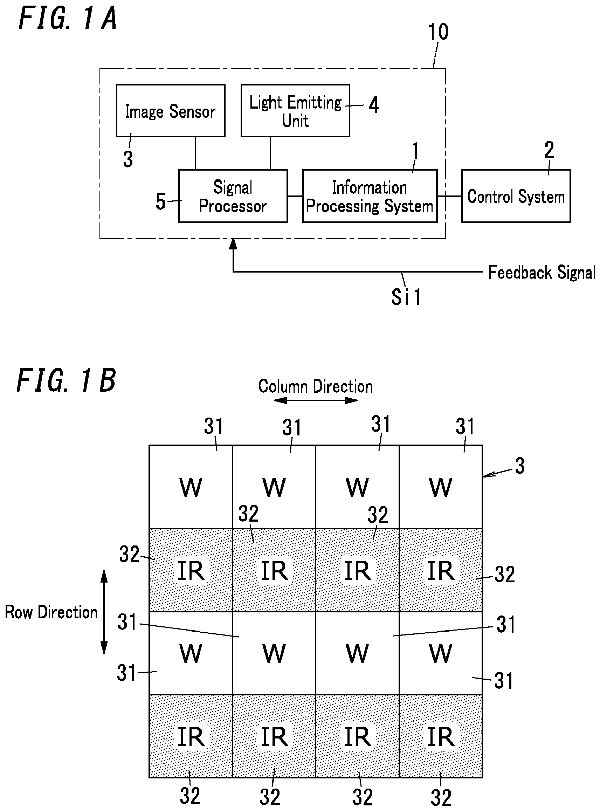

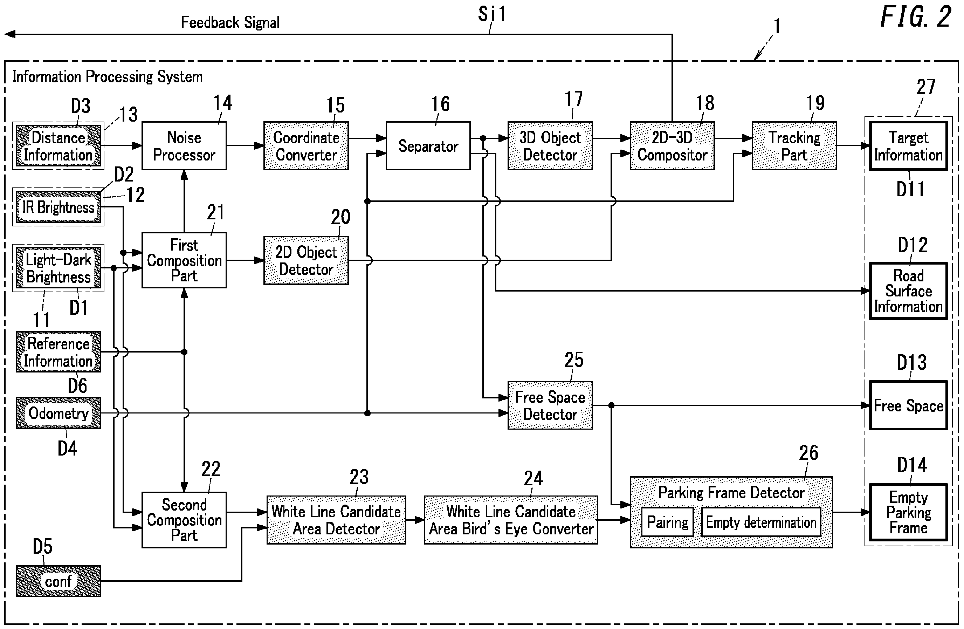

First, an overview of an information processing system 1 according to this embodiment will be described with reference to FIGS. 1A, 1B and 2.

As illustrated in FIG. 1A, the information processing system 1 is implemented as a system to be applied for an image sensor 3. The image sensor 3 has a plurality of pixels. The image sensor 3 is an element to: image, on a light receiving surface where the plurality of pixels are arranged, light from an object through an optical system; photoelectrically convert the intensity of the light into an amount of charge; read the amount of charge; and output the read amount of charge, as an electrical signal.

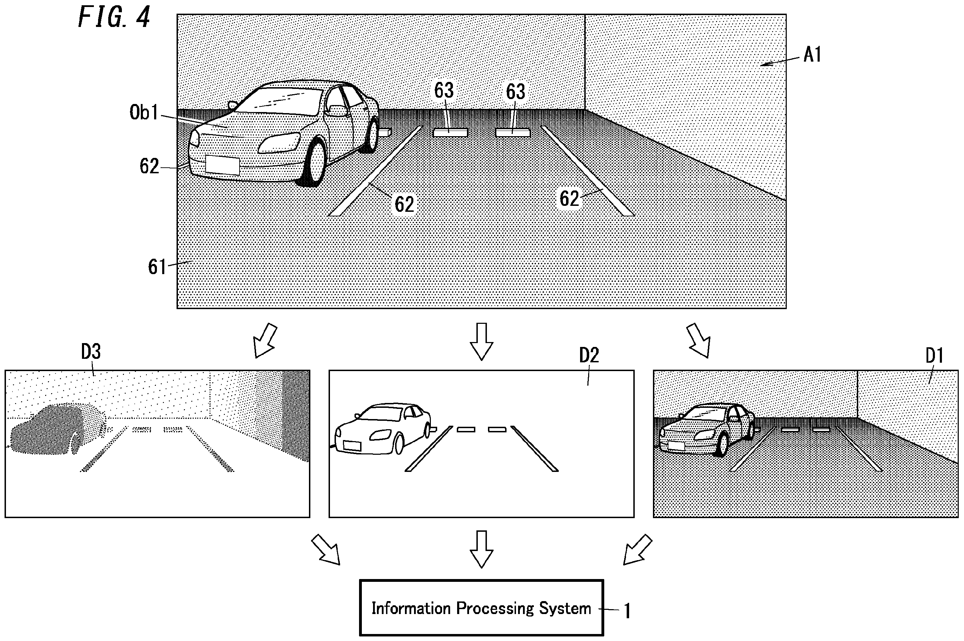

As illustrated in FIG. 1B, the image sensor 3 has a first pixel 31 and a second pixel 32. The first pixel 31 has sensitivity for visible light. The second pixel 32 has sensitivity for infrared light. The information processing system 1 according to this embodiment executes various processes based on information to be acquired from the image sensor 3 as above. Thus, the information processing system 1 can obtain an information processing result relating to a state of a monitoring area A1 (see FIG. 4) within an angle of view of the image sensor 3. The "information processing result" referred to in the present disclosure is a result of information processing, obtained by the information processing system 1, and includes, as one example, information relating whether or not an object(s) Ob1 (see FIG. 4) is present in the monitoring area A1, and the like.

As illustrated in FIG. 2, the information processing system 1 according to this embodiment includes a first acquirer 11, a second acquirer 12 and a third acquirer 13. The first acquirer 11 is configured to acquire first brightness information D1 from the first pixel 31. The first brightness information D1 relates to a pixel value of the first pixel 31. The second acquirer 12 is configured to acquire second brightness information D2 from the second pixel 32. The second brightness information D2 relates to a pixel value of the second pixel 32. The third acquirer 13 is configured to acquire distance information D3 from the second pixel 32. The distance information D3 relates to a distance between the image sensor 3 and the object Ob1 (see FIG. 4) by which the infrared light is reflected.

According to the above configuration, the information processing system 1 can acquire three types of information (the first brightness information D1, the second brightness information D2 and the distance information D3) from two types of pixels (the first pixel 31 and the second pixel 32) provided for the single image sensor 3. Although the first brightness information D1, the second brightness information D2 and the distance information D3 are different information from one another, they have a correlation with one another by being obtained from the single image sensor 3. In particular, since both the second brightness information D2 and the distance information D3 are acquired from the second pixel 32, they have a strong correlation therebetween. Therefore, the information processing system 1 can obtain, for example, various information relating to the state of the monitoring area A1 within the angle of view of the image sensor 3 from the three types of information with relatively high accuracy. Consequently, the information processing system 1 can realize improving the accuracy in the information processing.

## (2) Configuration

Next, the configurations of the information processing system 1 and a sensor system 10 according to this embodiment will be described in detail with reference to FIGS. 1A, 1B and 2.

## (2.1) Premise

In this embodiment, the information processing system 1 and the sensor system 10 are assumed to be provided for a moving body such as an automobile, for example. In particular, the moving body is assumed to be an automobile to be driven by a person. The information processing system 1 and the sensor system 10 are utilized, for example, in an advanced driver assistance system (ADAS), automated driving techniques or driver monitoring techniques, of the moving body. In the ADAS or the automated driving techniques, the information processing system 1 can detect whether or not the object Ob1 is present around the moving body by recognizing the monitoring area A1 around the moving object, for example. In this case, examples of the object Ob1, which can be detected around the moving body, may include persons (including pedestrians, stationary persons, persons sitting, and persons riding bicycle, etc.), organisms such as small animals, another moving bodies, and structures such as walls, guardrails, and traffic lights.

Thus, the information processing system 1 in this embodiment basically obtains, as the information processing result, the information relating to the state of the monitoring area A1 around the moving body. As one example, the information processing result includes one or more pieces of information selected from the group consisting of: information about whether or not the object Ob1 is present in the monitoring area A1 around the moving body; information about a position in the monitoring area A1, of the object Ob1 present in the monitoring area A1; and information about an attribute of the object Ob1.

The "visible light" referred to in the present disclosure means electromagnetic waves (i.e., visible ray) with wavelengths that are visible to the human eye. The lower limit in the wavelengths of the visible light is in a range of approximately $\geq 360$ nm to $\leq 400$ nm. The upper limit in the wavelengths of the visible light is in a range of approximately $\geq 760$ nm to $\leq 830$ nm. The first pixel 31 of the image sensor 3 has sensitivity for light in such a wavelength range (visible ray). In this embodiment, as one example, the first pixel 31 is assumed to have sensitivity in the almost entire wavelength range of such the visible light.

The "infrared light" referred to in the present disclosure means electromagnetic waves (i.e., infrared ray) with a wavelength longer than that of the red color of the visible light but shorter than that of the radio waves. Therefore, the lower limit in the wavelengths of the infrared light is in a range of approximately $\geq 760$ nm to $\leq 830$ nm. The upper limit in the wavelengths of the infrared light is in a range of approximately $\geq 2.5$ $\mu$m (near infrared) to $\leq 4.0$ $\mu$m (middle infrared). The second pixel 32 of the image sensor 3 has sensitivity for light in such a wavelength range (infrared ray). In this embodiment, as one example, the second pixel 32 is assumed to have sensitivity in the vicinity of a center wavelength in wavelengths of output light from a light emitting unit 4 described later.

Also, the "image" referred to in the present disclosure includes a video (i.e., a moving image) or a still image. Furthermore, the video may include an image composed of a plurality of still images obtained by time-lapse shooting or the like. In this embodiment, as one example, the image is assumed to be a still image.

(2.2) Overall Configuration

As illustrated in FIG. 1A, the information processing system 1 according to this embodiment is connected to a control system 2. The control system 2 is configured to operate in response to receiving of an output signal from the information processing system 1. The output signal from the information processing system 1 includes at least the result of the information processing (i.e., the information processing result) to be obtained at the information processing system 1.

The control system 2 operates in response to receiving of the output signal from the information processing system 1. As described above, the output signal from the information processing system 1 includes the information processing result. Thus, the control system 2 can operate according to the information processing result. As one example, the control system 2 may present information to a driver of the moving body (e.g., allow a display device to display information for assisting driving of the moving body) as appropriate according to the information processing result received from the information processing system 1. Furthermore, the control system 2 may assist driving (maneuvering) of the moving body by controlling steering or braking, etc. of the moving body according to the information processing result received from the information processing system 1.

The information processing system 1 constitutes, together with the image sensor 3, the light emitting unit 4 and a signal processor 5, the sensor system 10. In other words, the sensor system 10 according to this embodiment includes the information processing system 1 and the image sensor 3. In particular, the sensor system 10 according to this embodiment includes not only the information processing system 1 and the image sensor 3 but also the light emitting unit 4 and the signal processor 5. As one example, all the information processing system 1, the image sensor 3, the light emitting unit 4 and the signal processor 5 (constituting the sensor system 10) are provided for the moving body. As one example, the control system 2 to be connected to the sensor system 10 is also provided for the moving body.

In this embodiment, the control system 2 is not included in the components of the sensor system 10. However, the control system 2 may be included in the components of the sensor system 10. Also, in this embodiment, both the light emitting unit 4 and the signal processor 5 are included in the components of the sensor system 10. However, the sensor system 10 may include only either the light emitting unit 4 or the signal processor 5, or neither the light emitting unit 4 nor the signal processor 5.

In this embodiment, as illustrated in FIG. 1A, the information processing system 1 is connected to the image sensor 3 and the light emitting unit 4 via the signal processor 5. More specifically, both the image sensor 3 and the light emitting unit 4 are connected to the signal processor 5, and the signal processor 5 is connected to the information processing system 1. The signal processor 5 reads the electrical signal from the image sensor 3, and performs various signal processes, such as filtering, for the electrical signal read. Also, the signal processor 5 has a function of controlling the light emitting unit 4, and allows the light emitting unit 4 to emit light at an arbitrary timing.

In this embodiment, the signal processor 5 generates the first brightness information D1, the second brightness information D2 and the distance information D3 based on the electrical signal read from the image sensor 3. The first brightness information D1 relates to a pixel value of the first pixel 31, and is generated based on the electrical signal read from the first pixel 31. The second brightness information D2 relates to a pixel value of the second pixel 32, and is generated based on the electrical signal read from the second pixel 32. The distance information D3 relates to a distance between the image sensor 3 and the object Ob1 by which the infrared light is reflected, and is generated based on the electrical signal read from the second pixel 32.

As above, the information processing system 1 is connected to the image sensor 3 via the signal processor 5, and acquires the first brightness information D1, the second brightness information D2 and the distance information D3 from the image sensor 3 via the signal processor 5. In short, the information processing system 1 in this embodiment acquires the first brightness information D1 not directly from the first pixel 31 of the image sensor 3 but indirectly from the first pixel 31 via the signal processor 5. Similarly, the information processing system 1 acquires the second brightness information D2 not directly from the second pixel 32 of the image sensor 3 but indirectly from the second pixel 32 via the signal processor 5. Similarly, the information processing system 1 acquires the distance information D3 not directly from the second pixel 32 of the image sensor 3 but indirectly from the second pixel 32 via the signal processor 5.

In this embodiment, as illustrated in FIG. 1B, the image sensor 3 includes a plurality of pixels including two or more first pixels 31 and two or more the second pixels 32. The plurality of pixels are two-dimensionally disposed so as to be arranged in both a row direction (i.e., a vertical direction) and a column direction (i.e., a horizontal direction) of a light receiving surface of the image sensor 3. FIG. 1B is a schematic drawing for showing the arrangement of the two or more first pixels 31 and the two or more second pixels 32. Many first pixels 31 and many second pixels 32 may be actually arranged on the light receiving surface of the image sensor 3. In FIG. 1B, 16 pixels (eight first pixels 31 and eight second pixels 32) are arranged in a 4×4 of matrix in the row direction and the column direction of the light receiving surface. In FIG. 1B, the two or more first pixels 31 having sensitivity for the visible light are marked with the letter "W" in the sense of "white", and the two or more second pixels 32 having sensitivity for the infrared light are marked with the letter "IR" in the sense of "infrared."

Since the two or more first pixels 31 are two-dimensionally disposed as above, the first brightness information D1, acquired from the image sensor 3 via the signal processor 5 by the information processing system 1, constitutes an image (brightness image) that is a set of outputs of the two or more first pixels 31. Similarly, since the two or more second pixels 32 are two-dimensionally disposed, the second brightness information D2, acquired from the image sensor 3 via the signal processor 5 by the information processing system 1, constitutes an image (brightness image) that is a set of outputs of the two or more second pixels 32. Furthermore, since the two or more second pixels 32 are two-dimensionally disposed, the distance information D3, acquired from the image sensor 3 via the signal processor 5 by the information processing system 1, constitutes an image (distance image) that is a set of outputs of the two or more second pixels 32.

In this embodiment, as one example, in each of some columns, a plural number of the first pixels 31 are arranged in the column direction of the light receiving surface of the image sensor 3, and in each of another columns, a plural number of the second pixels 32 are arranged in the column direction of the light receiving surface of the image sensor 3. Also, the first pixels 31 and the second pixels 32 are alternately arranged in the row direction of the light receiving surface. That is to say, the plural number of first pixels 31 arranged in the column direction of the light receiving surface constitute a first pixel array, and the plural number of plural second pixels 32 arranged in the column direction of the light receiving surface constitute a second pixel array. Furthermore, first pixel arrays and second pixel arrays are alternately arranged in the row direction of the light receiving surface. According to such the arrangement, the two or more first pixels 31 and the two or more second pixels 32 can realize achieve a relatively high resolution in the column direction of the light receiving surface.

In this embodiment, the two or more first pixels 31 have sensitivity in the almost entire wavelength range of such the visible light, as described above. Accordingly, even if any color of light is input, each first pixel 31 basically generates an output in accordance with the intensity of the light as long as in the wavelength range of the visible light. That is to say, the first brightness information D1 output from each first pixel 31 includes light and darkness information representing the intensity of light input to the corresponding first pixel 31.

In this embodiment, as one example, the number of first pixels 31 (number of pixels) and the number of second pixels 32 (number of pixels) of the image sensor 3 are assumed to be the same as each other. However, this is only an example and should not be construed as limiting. The number of first pixels 31 (number of pixels) and the number of second pixels 32 (number of pixels) of the image sensor 3 may be different from each other.

In this embodiment, as one example, an infrared cut filter, which shields the infrared light, is disposed on the front faces of the two or more first pixels 31. However, the infrared cut filter is not an essential component for the present system, and may be omitted as appropriate.

The light emitting unit 4 is disposed together with the image sensor 3 to be directed toward the monitoring area A1. The light emitting unit 4 emits light to at least the monitoring area A1. The light emitting unit 4 outputs light with at least the wavelength range in which the second pixels 32 of the image sensor 3 have sensitivity (i.e., infrared light). The light emitting unit 4 may include an element having a relatively high response speed and capable of performing high speed modulation (e.g., high speed flashing), such as a light emitting diode (LED) or a laser diode.

The light emitting unit 4 as above is used in combination with the image sensor 3, which can contribute to obtaining the information (distance information D3) relating to the distance to the object Ob1 present in the monitoring area A1 by a Time-of-Flight (ToF) method. That is to say, a flight time varies depending on the distance between the image sensor 3 and the object Ob1. The flight time mentioned herein is a time required from when the output light is emitted from the light emitting unit 4 to when the output light is reflected by the object Ob1 and received at the second pixels 32 of the image sensor 3. Therefore, it is possible to measure the distance to the object Ob1 reflecting the light, by measuring the flight time of the light (infrared light in this embodiment), using this method.

Hereinafter, the specific process for obtaining the distance information D3 will be described in brief with one example. In this embodiment, the signal processor 5 allows the light emitting unit 4 to emit light with intensity modulated (hereinafter, sometimes referred to as "intensity modulated light") to the monitoring area A1 in order to measure the time from the projection of light (light emission) to light reception. Then, the signal processor 5 measures the time based on a phase difference between: a phase of an intensity change at a time point of the light reception by the image sensor 3; and a phase of an intensity change at a time point of the light emission from the light emitting unit 4. If the intensity modulated light has a constant frequency in the intensity change, the phase difference can be translated into the distance to the object Ob1 by a relatively simple calculation.

That is to say, it is assumed that the intensity modulated light, the intensity is changed, is projected from the light emitting unit 4 to the monitoring area A1, and the intensity of light received at one second pixel 32 of the image sensor 3 is accordingly changed. The time difference between the same phases reflects the distance to the object Ob1. Therefore, the distance L to the object Ob1 is expressed by the following equation 1, where c [m/s] denotes the speed

of light, and $\Delta t$ [s] denotes the time difference.

$$L = c \cdot \Delta t / 2 \qquad \text{(Equation 1)}$$

Furthermore, the time difference $\Delta t$ is expressed by the following equation 2, where f [Hz] denotes a frequency of a modulation signal for modulating the intensity of light, and $\varphi$ [rad] denotes the phase difference.

$$\Delta t = \varphi / 2\pi f \qquad \text{(Equation 2)}$$

Thus, when the phase difference $\varphi$ is obtained, the distance L to the object Ob1 is also obtained.

To obtain the phase difference $\varphi$, the present system may calculate the light receiving intensity about a plurality of different phases of the modulation signal for each second pixel 32 of the image sensor 3. Actually, the present system may detect the amount of light received in each phase section having a predetermined phase width (time width) for each second pixel 32 of the image sensor 3, and use the light reception output corresponding to the amount of light received for the calculation of the phase difference $\varphi$. As one example, if each phase section is defined as an interval of 90 degrees, four phase sections, of which phase intervals are equal to each other, are periodically obtained for one period of the modulation signal. In this case, the phase difference $\varphi$ is expressed by the following equation 3, where C0 to C3 denote the amounts of light received in the four phase sections, respectively.

$$\varphi = \tan^{-1}\{(C0 - C2) / (C1 - C3)\} \quad \text{(Equation 3)}$$

The sign of the phase difference $\varphi$ changes depending on which phases of the modulation signal are respectively set to correspond to the amounts of light received C0 to C3. The phase difference $\varphi$ may be therefore used as an absolute value.

Thus, since it is necessary to project the intensity modulated light from the light emitting unit 4 to detect the amount of light received for each specific phase section in the image sensor 3, the signal processor 5 is provided. The signal processor 5 drives the light emitting unit 4 by giving the modulation signal to the light emitting unit 4 such that the intensity modulated light as described above is projected. From the image sensor 3, the light reception outputs corresponding to the amount of light received C0 to C3 for the four phase sections are obtained, and the light reception outputs (electrical signals) of the image sensor 3 are input to the signal processor 5. The signal processor 5 performs an operation for obtaining the distance to the object Ob1, using the light reception outputs. At this time, the signal processor 5 gives a read signal, generated based on a reference signal synchronized with the modulation signal, to the image sensor 3 to read the light reception outputs.

(2.3) Configuration of Information Processing System

Next, the configuration of the information processing system 1 according to this embodiment will be described with reference to FIG. 2.

In this embodiment, the information processing system 1 has various functions in addition to the first acquirer 11, the second acquirer 12 and the third acquirer 13. That is to say, the information processing system 1 further includes a noise processor 14, a coordinate converter 15, a separator 16, a three dimensional object detector 17 (3D object detector), a compositor 18 and a tracking part 19, as illustrated in FIG. 2. The information processing system 1 further includes a two dimensional object detector 20 (2D object detector), a first composition part 21, a second composition part 22, a white line candidate area detector 23, a white line candidate area bird's eye converter 24, a free space detector 25, a parking frame detector 26 and an output part 27.

The "three dimensional" is denoted as "3D" and the "two dimensional" is denoted as "2D", for example, as the "3D object detector" in FIG. 2 and some drawings. The compositor 18 in this embodiment is configured to compose a detection result of the 3D object detector 17 and a detection result of the 2D object detector 20. For this reason, the compositor 18 is denoted as the "2D-3D compositor" in FIG. 2 and some drawings. Also, the first brightness information D1 is denoted as "light-dark brightness" and the second brightness information D2 is denoted as "IR brightness" in FIG. 2 and some drawings.

In this embodiment, the information processing system 1 includes a computer system (including a server or cloud computing system) including one or more processors and one or more memories, for example. The function of the information processing system 1 is realized by making the one or more processors execute a program(s) stored in the one or more memories. The program may be stored in advance in the one or more memories, distributed after having been stored in a non-transitory storage medium such as a memory card, or downloaded via a telecommunications line. In other words, the above program is designed to cause the one or more processors to function as the information processing system 1.

Also, odometry information D4 (denoted as "Odometry" in the drawing) and confidence information D5 (denoted as "Conf' in the drawing) are further input to the information processing system 1. That is to say, five kinds of data (information) in total are input to the information processing system 1; the first brightness information D1, the second brightness information D2, the distance information D3, the odometry information D4, and the confidence information D5. The odometry information D4 includes information that can be detected by a sensor(s) mounted on the moving body, such as an angle of inclination of the moving body, a traveling direction of the moving body, a moving speed of the moving body, an acceleration applied to the moving body, a depressing amount of an accelerator pedal (accelerator opening), a depressing amount of a brake pedal, or a rudder angle. The odometry information D4 further includes information based on the current position of the moving body, which can be detected using the Global Positioning System (GPS) or the like. The information based on the current position may include the number of lanes of the road at the present position, the distinction of the white line/yellow line at the present position, the roadway width at the present position, the presence or absence of a sidewalk at the present position, the slope of the road at the present position, or the curvature of a curve in the road at the present position.

The confidence information D5 relates to the confidence of data. As one example, the confidence information D5 is used for determining whether or not the distance information D3 corresponds to pseudo-distance information affected by interference or multipath, etc. Also, the confidence information D5 is used for determining whether or not the first brightness information D1 or the second brightness information D2 corresponds to the pseudo-distance information.

The first acquirer 11 is connected to the signal processor 5. That is to say, the first acquirer 11 is connected to the first pixels 31 of the image sensor 3 via the signal processor 5. As described above, the first acquirer 11 acquires the first brightness information D1 relating to the pixel values of the first pixels 31 from the first pixels 31. In this embodiment, the first acquirer 11 acquires the first brightness information D1 indirectly from the first pixels 31 via the signal processor 5.

The second acquirer 12 is connected to the signal processor 5. That is to say, the second acquirer 12 is connected to the second pixels 32 of the image sensor 3 via the signal processor 5. As described above, the second acquirer 12 acquires the second brightness information D2 relating to the pixel values of the second pixels 32 from the second pixels 32. In this embodiment, the second acquirer 12 acquires the second brightness information D2 indirectly from the second pixels 32 via the signal processor 5.

The third acquirer 13 is connected to the signal processor 5. That is to say, the third acquirer 13 is connected to the second pixels 32 of the image sensor 3 via the signal processor 5. As described above, the third acquirer 13 acquires, from the second pixels 32, the distance information D3 relating to the distance between the image sensor 3 and the object Ob1 by which the infrared light is reflected. In this embodiment, the third acquirer 13 acquires the distance information D3 indirectly from the second pixels 32 via the signal processor 5.

The noise processor 14 is configured to correct the distance information D3 based on the distance information D3 and one or more pieces of information selected from the group consisting of the first brightness information D1 and the second brightness information D2. The one or more pieces of information selected from the group consisting of the first brightness information D1 and the second brightness information D2 are any of: the first brightness information D1; the second brightness information D2; and brightness information (hereinafter, sometimes referred to as a "composite image") obtained by composing the first brightness information D1 and the second brightness information D2. The noise processor 14 is connected to the third acquirer 13. In this embodiment, the noise processor 14 is connected to the second acquirer 12 via the first composition part 21. That is to say, the first brightness information D1 or the second brightness information D2 is input to the noise processor 14 not directly but indirectly via the first composition part 21. Because the distance information D3 itself is relatively low in an SN ratio and large in the ratio of noise, the noise processor 14 reduces the noise in the distance information D3. How the noise processor 14 operates will be described in detail in the column of "(3) Operation."

The coordinate converter 15 is provided at a subsequent stage of the noise processor 14. The coordinate converter 15 performs a coordinate conversion process such that the distance information D3 (where the noise is reduced) is converted into an X, Y, Z rectangular coordinate system. Specifically, the coordinate converter 15 generates a point cloud (point cloud data) having X, Y, Z coordinate values based on the distance information D3.

The separator 16 is configured to separate the object Ob1 from a peripheral area located around the object Ob1. The "peripheral area" mentioned in the present disclosure corresponds to, for example, a road surface, a ground surface, a floor surface, etc. which is excluded from the detection target, when detecting whether or not the object Ob1 is present. In other words, the separator 16 separates an area including the object Ob1 other than the road surface, etc. from the peripheral area as the road surface, etc. The separator 16 separates the object Ob1 from the peripheral area for the distance information D3 (point cloud) after the coordinate conversion, received from the coordinate converter 15. In this embodiment, the separator 16 first extracts a component corresponding to the peripheral area from the distance information D3 after the coordinate conversion, received from the coordinate converter 15. Then, the separator 16 removes the extracted peripheral area from the distance information D3 after the coordinate conversion, thereby outputting a component corresponding to the object Ob1 of the distance information D3 to the 3D object detector 17 provided at the subsequent stage thereof. Here, the peripheral area corresponds to all areas other than the object Ob1 in the distance information D3, and includes not only an area in the vicinity of the object Ob1 but also an area in the distant of the object Ob1. Furthermore, in this embodiment, the separator 16 outputs information about the separated peripheral area to the output part 27 as road surface information D12. In addition, the odometry information D4 is also input to the separator 16. How the separator 16 operates will be described in detail in the column of "(3) Operation."

The 3D object detector 17 is configured to detect the object Ob1 based on the distance information D3. In this embodiment, the 3D object detector 17 receives, from the separator16, the distance information D3 in a state where the peripheral area is removed. The 3D object detector 17 detects the presence or absence of the object Ob1 in the monitoring area A1, using the distance information D3 received from the separator 16. When determining that the object Ob1 is present, the 3D object detector 17 outputs, as a "target", the distance information D3 (point cloud) corresponding to the object Ob1.

In this embodiment, the 3D object detector 17 detects the object Ob1 based on one or more pieces of information selected from the group consisting of the first brightness information D1 and the second brightness information D2, in addition to the distance information D3. That is to say, the noise processor 14 is provided at the preceding stage of the 3D object detector 17, and corrects the distance information D3, indirectly using the one or more pieces of information selected from the group consisting of the first brightness information D1 and the second brightness information D2, as described above. Accordingly, the 3D object detector 17 detects the object Ob1, indirectly using not only the distance information D3 but also the one or more pieces of information selected from the group consisting of the first brightness information D1 and the second brightness information D2.

In other words, the 3D object detector 17 may detect the object Ob1 based on not only the distance information D3 but also the first brightness information D1 corrected so as to match with a timing of the second brightness information D2. In this case, the 3D object detector 17 detects the object Ob1, not directly using the second brightness information D2, but using the first brightness information D1 corrected to so as to match with the timing of the second brightness information D2. How the 3D object detector 17 operates will be described in detail in the column of "(3) Operation."

The compositor 18 is configured to compose the detection result of the 2D object detector 20 and the detection result of the 3D object detector 17. In this embodiment, the 3D object detector 17 and the 2D object detector 20 are disposed at the preceding stage of the compositor 18, and the detection results of the 3D object detector 17 and the 2D object detector 20 are input to the compositor 18. Here, the detection result of the 3D object detector 17 corresponds to a detection result for the object Ob1 based on at least the distance information D3, namely, a 3D detection result for the object Ob1.The detection result of the 2D object detector 20 corresponds to a detection result for the object Ob1 based on the one or more pieces of information selected from the group consisting of the first brightness information D1 and the second brightness information D2, namely, a 2D detection result for the object Ob1. That is to say, the compositor 18 does not "directly" compose the distance information D3 and the one or more pieces of information selected from the group consisting of the first brightness information D1 and the second brightness information D2, but composes the detection results for the object Ob1 respectively based on the distance information D3 and the one or more pieces of information selected from the group consisting of the first brightness information D1 and the second brightness information D2. Thus, it can be said that the compositor 18 "indirectly" composes the distance information D3 and the one or more pieces of information selected from the group consisting of the first brightness information D1 and the second brightness information D2.

As above, in this embodiment, the detection for the object Ob1 is performed at the preceding stage of the compositor 18, and the compositor 18 composes the distance information D3 and the one or more pieces of information selected from the group consisting of the first brightness information D1 and the second brightness information D2 based on the detection result for the object Ob1. The "detection result for the object Ob1" mentioned herein means both detection results of the 3D object detector 17 and the 2D object detector 20. More specifically, the compositor 18 changes the detection result for the object Ob1 based on the distance information D3, using the detection result for the object Ob1 based on the one or more pieces of information selected from the group consisting of the first brightness information D1 and the second brightness information D2. In other words, the compositor 18 corrects the detection result (3D detection result) of the 3D object detector 17, using the detection result (2D detection result) of the 2D object detector 20. Accordingly, the compositor 18 composes the 2D detection result and the 3D detection result.

That is to say, the compositor 18 corrects the detection result of the 3D object detector 17 by composing the distance information D3 and the one or more pieces of information selected from the group consisting of the first brightness information D1 and the second brightness information D2, and outputs the corrected detection result of the 3D object detector 17 to the tracking part 19. How the compositor 18 operates will be described in detail in the column of "(3) Operation."

The compositor 18 is further configured to output a feedback signal Si1 to the sensor system 10 including the image sensor 3. The image sensor 3 outputs an electrical signal in which one or more parameters selected from the group consisting of an exposure time and a frame rate are changed in response to the feedback signal Si1. That is to say, the feedback signal Si1 output from the compositor 18 is fed back to the sensor system 10, as illustrated in FIGS. 1A and 2. The feedback signal Si1 includes the corrected detection result of the 3D object detector 17, as the output of the compositor 18. The image sensor 3 outputs the electrical signal in which at least one of the exposure time or the frame rate is changed in response to the feedback signal Si1.

The tracking part 19 is configured to track the object Ob1 present in the monitoring area A1. The tracking part 19 tracks the object Ob1 by comparing, between two or more frames in the output of the image sensor 3, the corrected detection results (the target) of the 3D object detector 17 received from the compositor 18. Accordingly, the tracking part 19 can identify that the object Ob1 at a position in one frame and the object Ob1 moved to another position in another frame are the same object, even while the object Ob1 moves in the monitoring area A1. The tracking result of the tracking part 19 is output, as the target information D 11, to the output part 27. Note that, the odometry information D4 is also input to the tracking part 19.

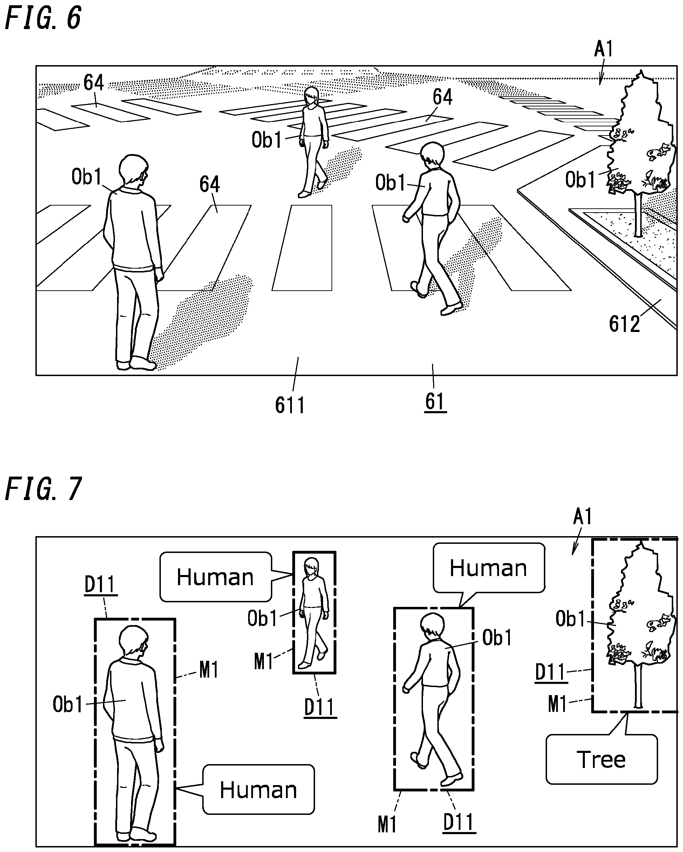

The 2D object detector 20 is configured to detect the object Ob1 based on one or more pieces of information selected from the group consisting of the first brightness information D1 and the second brightness information D2. In this embodiment, the 2D object detector 20 is connected to the first acquirer 11 via the first composition part 21. The second acquirer 12 is also connected to the first composition part 21, and accordingly, the 2D object detector 20 is also connected to the second acquirer 12 via the first composition part 21. That is to say, the first brightness information D1 or the second brightness information D2 is not directly input to the 2D object detector 20, but indirectly input to the 2D object detector 20 via the first composition part 21. The output of the first composition part 21 reflects the one or more pieces of information selected from the group consisting of the first brightness information D1 and the second brightness information D2, and accordingly, the 2D object detector 20 detects the object Ob1, indirectly using the first brightness information D1 or the second brightness information D2. The 2D object detector 20 detects whether or not the object Ob1 is present in the monitoring area A1, using the one or more pieces of information selected from the group consisting of the first brightness information D1 and the second brightness information D2, received from the first composition part 21. When determining that the object Ob1 is present, the 2D object detector 20 outputs the one or more pieces of information selected from the group consisting of the first brightness information D1 and the second brightness information D2, where a marker M1 (see FIG. 7) corresponding to the object Ob1 is put.

In this embodiment, the 2D object detector 20 detects the object Ob1 based on the one or more pieces of information selected from the group consisting of the first brightness information D1 and the second brightness information D2. That is to say, the first composition part 21 is provided at the preceding stage of the 2D object detector 20, and the first composition part 21 composes the first brightness information D1 and the second brightness information D2. Accordingly, the 2D object detector 20 can detect the object Ob1, not only using the first brightness information D1 or the second brightness information D2 but also indirectly using the composite image obtained by composing the first brightness information D1 and the second brightness information D2. How the 2D object detector 20 operates will be described in detail in the column of "(3) Operation."

The first composition part 21 is connected to the first acquirer 11 and the second acquirer 12. The first composition part 21 is configured to compose the first brightness information D1 and the second brightness information D2. In this embodiment, since the first brightness information D1 and the second brightness information D2 are images, the composite image is generated by composing the first brightness information D1 and the second brightness information D2. The "composition" referred to in the present disclosure includes a weighted composition. For example, if the weighting factor of the first brightness information D1 and the second brightness information D2 is "1 to 0", the first composition part 21 outputs the first brightness information D1 itself, as the composite image. On the other hand, for example, if the weighting factor of the first brightness information D1 and the second brightness information D2 is "0 to 1", the first composition part 21 outputs the second brightness information D2 itself, as the composite image. In other words, the first composition part 21 may have a function as a selector alternatively outputting either the first brightness information D1 or the second brightness information D2. The first brightness information D1 and the second brightness information D2 after the composition, composed by the first composition part 21, are input to the noise processor 14 and the 2D object detector 20. For this reason, the first composition part 21 is preferably controlled as appropriate such that the output of the first composition part 21 is adjusted to the composite image suitable for the operations of the noise processor 14 and the 2D object detector 20. Furthermore, the composite image to be output from the first composition part 21 is preferably composed by changing the weighting factor as appropriate in accordance with the state of the monitoring area A1, such as daytime/nighttime or weather (rain or fog).

The second composition part 22 is connected to the first acquirer 11 and the second acquirer 12. The second composition part 22 is configured to compose the first brightness information D1 and the second brightness information D2. Like the first composition part 21, the second composition part 22 also has a function as a selector alternatively outputting either the first brightness information D1 or the second brightness information D2. The first brightness information D1 and the second brightness information D2 after the composition, composed by the second composition part 22, are input to the white line candidate area detector 23. For this reason, the second composition part 22 is preferably controlled as appropriate such that the output of the second composition part 22 is adjusted to the composite image suitable for the operation of the white line candidate area detector 23. Furthermore, the composite image to be output from the second composition part 22 is preferably composed by changing the weighting factor as appropriate in accordance with the state of the monitoring area A1, such as daytime/nighttime or weather (rain or fog).

In this embodiment, the output of the first composition part 21 is input to the 2D object detector 20, and the output of the second composition part 22 is input to the white line candidate area detector 23. Thus, the targets to be detected, respectively corresponding to the outputs of the first composition part 21 and the second composition part 22, are different from each other, and therefore, the weighting factor used for the composition in the first composition part 21 is preferably different from that in the second composition part 22.

The first composition part 21 and the second composition part 22 each function as the "composition part" of composing the first brightness information D1 and the second brightness information D2. The composition part (the first and second composition parts 21 and 22) has a function of composing the first brightness information D1 and the second brightness information D2 so as to correct information relating to the positions of the first pixels 31 and the positions of the second pixels 32. The composition part (the first and second composition parts 21 and 22) changes the weighting factor to be used for composing the first brightness information D1 and the second brightness information D2 in response to reference information D6 received. The reference information D6 includes information relating to the state of the monitoring area A1, such as daytime/nighttime or weather (rain or fog). As one example, the reference information D6 may include information relating to at least one of the illuminance or the humidity around the object Ob1.

The white line candidate area detector 23 detects an area as a candidate of a white line 62 (see FIG. 4) drawn on a road surface 61 (see FIG. 4). The white line candidate area detector 23 detects the candidate area of the white line 62 based on the composite image of the first brightness information D1 and the second brightness information D2 received from the second composition part 22. To the white line candidate area detector 23, the confidence information D5 is also input. For example, the detection of the white line 62 can be realized by performing the edge extraction using a filter, etc. to the composite image of the first brightness information D1 and the second brightness information D2 to detect a portion where the pixel value (brightness) changes abruptly. The white line 62 as the target to be detected by the white line candidate area detector 23 is not limited to a white line, and may be, for example, a yellow line, a picture, a pattern, etc.

The white line candidate area bird's eye converter 24 is provided at a subsequent stage of the white line candidate area detector 23. The white line candidate area bird's eye converter 24 is configured to perform the coordinate conversion to the composite image of the first brightness information D1 and the second brightness information D2 such that the composite image is converted into a bird's-eye view image, viewed from directly above the candidate area of the white line 62, detected by the white line candidate area detector 23, and the periphery area of the white line 62.

The free space detector 25 is configured to detect a free space (i.e., an empty space) in the monitoring area A1 based on the distance information D3. In this embodiment, the free space detector 25 receives from the separator 16 the distance information D3 where the object Ob1 and the peripheral area located around the object Ob1 are separated from each other. The free space detector 25 detects the free space in the monitoring area A1, using the distance information D3 received from the separator 16. The detection result of the free space detector 25 is output as free space information D13 (denoted as "Free Space" in the drawing) to the output part 27. To the free space detector 25, the odometry information D4 is also input.

The parking frame detector 26 is configured to detect an empty parking frame (i.e., a parking frame of an empty space where the other vehicle is not parked) in the monitoring area A1. Generally, a plurality of parking frames are provided in parking lots of commercial facilities, hospitals, parks, stadiums, halls or transportation. The user of the parking lot looks for an empty parking frame, and parks the own vehicle (the moving body) in the empty parking frame. In such a case, the parking frame detector 26 can automatically search for the empty parking frame. In this embodiment, the parking frame detector 26 receives the detection result of the free space detector 25 and the output (i.e., the candidate area of the while line 62 after the coordinate conversion) of the white line candidate area bird's eye converter 24. The parking frame detector 26 performs the pairing between the detection result of the free space detector 25 and the output (i.e., the candidate area of the while line 62 after the coordinate conversion) of the white line candidate area bird's eye converter 24 to determine the empty parking frame. For example, the parking frame detector 26 determines, as one or more empty parking frames, one or more parking frames, positionally overlapping the free space, of a plurality of parking frames of the size capable of parking the moving body in the monitoring area A1. The detection result of the parking frame detector 26 is output as empty parking frame information D14 (denoted as "Empty Parking Frame" in the drawing) to the output part 27.

The output part 27 is configured to output an information processing result, obtained based on the first brightness information D1, the second brightness information D2 and the distance information D3. The information processing result relates to the state of the monitoring area A1 within an angle of view of the image sensor 3. That is to say, the information processing system 1 according to this embodiment executes various information processes relating to the state of the monitoring area A1, based on the first brightness information D1, the second brightness information D2 and the distance information D3 acquired from the image sensor 3, and allows the output part 27 to output its result. In this embodiment, for example, the output part 27 outputs the target information D11, the road surface information D12, the free space information D13 and the empty parking frame information D14 respectively acquired from the tracking part 19, the separator 16, the free space detector 25 and the parking frame detector 26. The output part 27 outputs their information to the control system 2.

In this embodiment, the information processing result includes at least one: of information about whether or not the object Ob1 is present in the monitoring area A1 around the moving body; information about a position in the monitoring area A1, of the object Ob1 present in the monitoring area A1; or information about an attribute of the object Ob1. Specifically, the target information D11 includes all the information about whether or not the object Ob1 is present in the monitoring area A1 around the moving body, the information about the position in the monitoring area A1, of the object Ob1 present in the monitoring area A1, and the information about the attribute of the object Ob1. The "attribute" referred to in the present disclosure includes, for example, a type of object Ob1. That is to say, the type of object Ob1 may include a distinction whether or not it is a person, a distinction whether it is a moving object (such as a person, a car or a bicycle) or a fixed object, or a distinction whether it is a street tree, a traffic light, or a guardrail, etc. Also, the "attribute" of the object Ob1 may include a size, a color or a motion (change), etc. of object Ob1. Furthermore, if the object Ob1 is a person, the "attribute" of the object Ob1 may include its gender, height, body type or age-group, etc. If the object Ob1 is a moving object, the "attribute" of the object Ob1 may include its moving direction or moving speed, etc.

Here, the information output by the output part 27 is appropriately changed according to the request of the output destination. For example, when the outputs of the output parts 27 in a plurality of moving bodies are aggregated to the cloud (cloud computing) or the like, each output part 27 may output meta-information, made as meta data.

(3) Operation

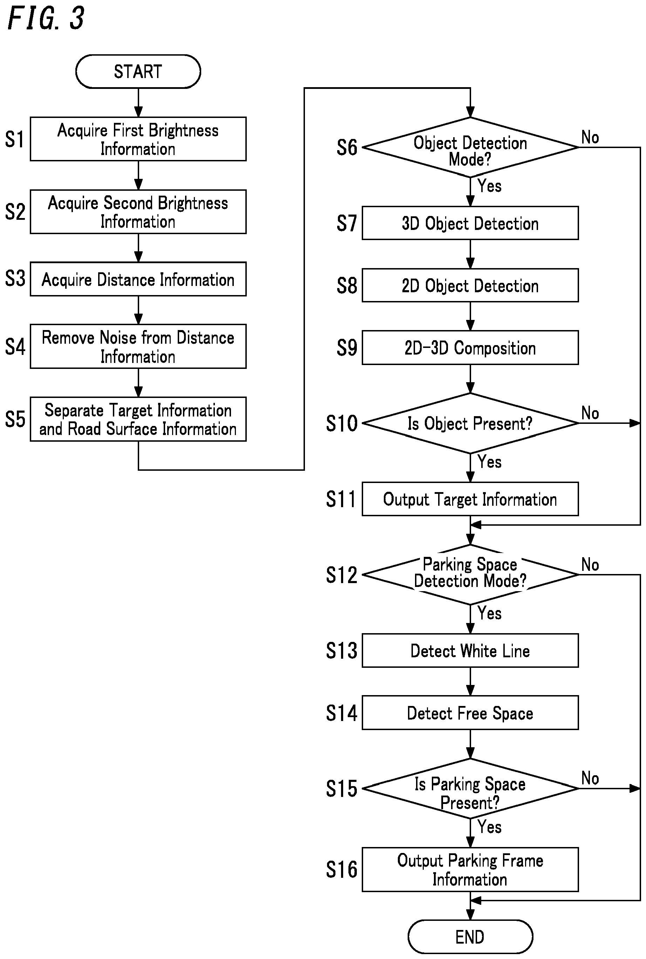

Next, the operation of the information processing system 1 according to this embodiment will be described with reference to FIGS. 3 to 8B.

(3.1) Overall Operation

The information processing system 1 according to this embodiment has a plurality of operation modes including at least a parking space detection mode and an object detection mode. The plurality of operation modes are modes capable of being switched between enabled/disabled individually. For example, if the parking space detection mode is enabled and all the remaining modes are disabled, the information processing system 1 operates only in the parking space detection mode. The parking space detection mode is an operation mode for detecting the empty parking frame, and in this operation mode, the empty parking frame information D14 described above is output from the output part 27. The object detection mode is an operation mode for detecting the object Ob1 in the monitoring area A1, and in this operation mode, the target information D11 described above is output from the output part 27.

FIG. 3 is a flowchart showing an operation example about how the information processing system 1 according to this embodiment operates.

That is to say, as illustrated in FIG. 3, the information processing system 1 executes: a first acquisition processing (in a step S1), including acquiring the first brightness information D1; a second acquisition processing (in a step S2), including acquiring the second brightness information D2; and a third acquisition processing (in a step S3), including acquiring the distance information D3. The information processing system 1 executes, with the first acquirer 11, the second acquirer 12 and the third acquirer 13, the first to third acquisition processings (in the steps S1 to S3) as needed, respectively.

Then, the information processing system 1 executes, with the noise processor 14, noise removal processing for reducing the noise in the distance information D3 by correcting the distance information D3, using the distance information D3 and one or more pieces of information selected from the group consisting of the first brightness information D1 and the second brightness information D2 (in a step S4). Note that, the noise removal processing will be described in detail in the column of "(3.2) Noise Removal Processing."

Then, the information processing system 1 executes, with the separator 16, separation processing for separating the object Ob1 from the peripheral area located around the object Ob1 in the distance information D3 after the coordinate conversion (in a step S5). Note that, the separation processing will be described in detail in the column of "(3.3) Separation Processing."

Then, the information processing system 1 determines whether or not the object detection mode is enabled (in a step S6). If determining that the object detection mode is enabled (if the answer is "Yes" in the step S6), the information processing system 1 executes a series of processes for detecting the object Ob1 (in steps S7 to S11). That is to say, the information processing system 1 executes, with the 3D object detector 17, the 3D object detection processing for detecting the object Ob1 (in the step S7), and with the 2D object detector 20, the 2D object detection processing for detecting the object Ob1 (in the step S8). Note that, the 3D object detection processing will be described in detail in the column of "(3.4) 3D Object Detection Processing," and the 2D object detection processing will be described in detail in the column of "(3.5) 2D Object Detection Processing."

Then, the information processing system 1 executes, with the compositor 18, composition processing for correcting the detection result of the 3D object detector 17, using the detection result of the 2D object detector 20, by the composition of the distance information D3 and one or more pieces of information selected from the group consisting of the first brightness information D1 and the second brightness information D2 (in the step S9). Note that, the composition processing will be described in detail in the column of "(3.6) Composition Processing."

Then, the information processing system 1 determines whether or not the object Ob1 is present based on the result of the composition processing (in the step S10). If determining that the object Ob1 is present (if the answer is "Yes" in the step S10), the information processing system 1 outputs, with the output part 27, the target information D11 (in the step S11), and further determines whether or not the parking space detection mode is enabled (in the step S12). If determining that the object Ob1 is not present (if the answer is "Yes" in the step S10), the information processing system 1 starts the process of the step S12 without outputting the target information D11.

If determining that the parking space detection mode is enabled (if the answer is "Yes" in the step S12), the information processing system 1 executes a series of processes for detecting the empty parking frame (in steps S13 to S16). That is to say, the information processing system 1 detects, with the white line candidate area detector 23, (the candidate area of) the white line 62 (in the step S13), and further detects, with the free space detector 25, the free space (in the step S14). The information processing system 1 determines, with the parking frame detector 26, whether or not the empty parking frame is present in the monitoring area A1 based on those results (in the step S15).

If determining that the empty parking frame is present (if the answer is "Yes" in the step S15), the information processing system 1 outputs, with the output part 27, the empty parking frame information D14 (in the step S16), and ends the series of processes. If determining that the empty parking frame is not present (if the answer is "Yes" in the step S15), the information processing system 1 ends the series of processes without outputting the empty parking frame information D14.

If determining that the object detection mode is disabled (if the answer is "No" in the step S6), the information processing system 1 skips the series of processes (in the steps S7 to S11) for detecting the object Ob1, and starts the process of the step S12. If determining that the parking space detection mode is disabled (if the answer is "No" in the step S12), the information processing system 1 skips the series of processes (in the steps S13 to S16) for detecting the empty parking frame, and ends the processes.

The information processing system 1 repeatedly executes a series of processes: the steps S1 to S16 as described above. The flowchart of FIG. 3 is only an example of the overall operation of the information processing system 1. Any of the processes may be appropriately omitted, another process may be appropriately added, or the order of the processes may be appropriately changed. For example, the order of the processes: the steps S1 to S3 may be changed. Specifically, after the second brightness information D2 and the distance information D3 are acquired (in the steps S2 and S3), the first brightness information D1 may be acquired (in the step S1).

Next, the operation in the parking space detection mode, of the information processing system 1, will be described.

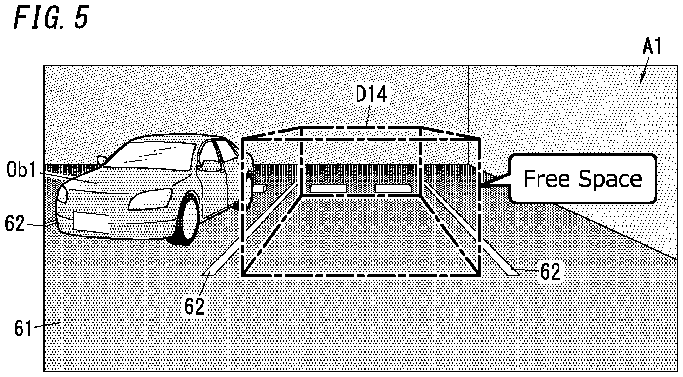

FIGS. 4 and 5 are explanatory drawings showing the overview of the operation in the parking space detection mode, of the information processing system 1. FIG. 4 schematically shows a state that the image of the monitoring area A1 is captured by the image sensor 3, and a state that the first brightness information D1, the second brightness information D2 and the distance information D3 (obtained from the output of the image sensor 3) are input to the information processing system 1. FIG. 5 schematically shows the information processing result by the information processing system 1 operating in the parking space detection mode (i.e., the empty parking frame information D14).

In the example of FIG. 4, it is assumed a scene in which the driver is trying to park the moving body in the parking lot. In the monitoring area A1, two or more parking frames are present, delimited by two or more white lines 62. The two or more parking frames includes a parking frame where another vehicle (object Ob1) is parked, and a parking frame (i.e., an empty parking frame) where no vehicle (object Ob1) is parked.

In such the scene, the information processing system 1 acquires the first brightness information D1, the second brightness information D2 and the distance information D3 from the image sensor 3 (via the signal processor 5), as illustrated in FIG. 4. The first brightness information D1 is the light and darkness information representing the intensity of light, input to the two or more first pixels 31. Therefore, apparently, the first brightness information D1 is an image, obtained by relatively faithfully reproducing the monitoring area A1 of the real space. The second brightness information D2 is the light and darkness information representing the intensity of the infrared light, output from the light emitting unit 4 and then input to the two or more second pixels 32. Therefore, the second brightness information D2 is an image, which is not sufficiently reproduced if the object Ob1 is relatively low in the reflectance to the infrared light, and further has a contrast lower than that of the first brightness information D1. The distance information D3 is a distance image representing the flight distance of the infrared light, output from the light emitting unit 4 and then input to the two or more second pixels 32, i.e., the distance between the image sensor 3 and the object Ob1. Therefore, the distance information D3 is not sufficiently reproduced if the object Ob1 is relatively low in the reflectance to the infrared light.

The information processing system 1 executes the series of processes (in the steps S13 to S16) for detecting the empty parking frame, using the first brightness information D1, the second brightness information D2 and the distance information D3, as described above.

As a result, the parking frame where no vehicle (object Ob1) is parked is detected as the empty parking frame, and the empty parking frame information D14 is generated, as illustrated in FIG. 5. The empty parking frame information D14 includes at least information about a position of the empty parking frame in the monitoring area A1. For example, when receiving the empty parking frame information D14 from the information processing system 1, the control system 2 may allow the display device of the moving body to display an image obtained by superimposing the empty parking frame information D14 on the image of the monitoring area A1, as illustrated in FIG. 5. In this case, the image displayed by the display device preferably includes a callout image (denoted as "Free Space" in FIG. 5) representing that the empty parking frame information D14 means the empty parking frame.

In this embodiment, a wheel stopper 63 (see FIG. 4) is installed in the parking frame surrounded by a pair of white lines 62. The information processing system 1 according to this embodiment also recognizes the wheel stopper 63, as the object Ob1. That is to say, in this embodiment, the object Ob1 is separated from the peripheral area in the distance information D3 after the coordinate conversion, in the separation processing (in the step S5) which is the preprocessing of the series of processes (in the steps S13 to S16) for detecting the empty parking frame. Therefore, if the parking frame is empty, the area of the road surface 61 surrounded by the pair of white lines 62 and the wheel stopper 63 is detected as the empty parking frame.

Next, the operation in the object detection mode, of the information processing system 1, will be described.

FIGS. 6 and 7 are explanatory drawings showing the overview of the operation in the object detection mode, of the information processing system 1. FIG. 6 schematically shows a state of the monitoring area A1. FIG. 7 schematically shows the information processing result by the information processing system 1 operating in the object detection mode (i.e., the target information D11).

In the example of FIG. 6, it is assumed a scene in which the moving object is stopped at the intersection. The road surface 61 including a roadway 611 and a sidewalk 612, pedestrian crossings 64, two or more persons crossing the pedestrian crossings 64 (object Ob1), and street trees (object Ob1) etc. are present in the monitoring area A1. In this example, the sidewalk 612 is higher than the roadway 611.

In such the scene, the information processing system 1 acquire the first brightness information D1, the second brightness information D2 and the distance information D3 from the image sensor 3 (via the signal processor 5). The information processing system 1 executes the series of processes (in the steps S7 to S11) for detecting the object Ob1, using the first brightness information D1, the second brightness information D2 and the distance information D3, as described above.

As a result, the two or more persons (pedestrians) present on the road surface 61 and the street trees are respectively detected as the objects Ob1, and the target information D11 is generated, as illustrated in FIG. 7. The target information D11 includes at least information about positions of the objects in the monitoring area A1. In the example of FIG. 7, the target information D11 includes images of markers M1, each of which is shaped like a frame surrounding a corresponding object Ob1, and images of the objects Ob1 within the markers M1. For example, when receiving the target information D11 from the information processing system 1, the control system 2 may allow the display device of the moving body to display an image obtained by superimposing the target information D11 on the image of the monitoring area A1, as illustrated in FIG. 7. In this case, the image displayed by the display device preferably includes callout images (denoted as "Human" and "Tree" in FIG. 7) respectively representing the attributes of the objects Ob1 shown by the target information D11.

In this embodiment, the object Ob1 is separated from the peripheral area in the distance information D3 after the coordinate conversion, in the separation processing (in the step S5) which is the preprocessing of the series of processes (in the steps S7 to S11) for detecting the object Ob1. Therefore, the information processing system 1 according to this embodiment can also recognize, as the object Ob1, a step between the roadway 611 and the sidewalk 612, which is higher than the roadway 611. Thus, the information processing system 1 can also detect the step on the road surface 61 (the step between the roadway 611 and the sidewalk 612) and separate only the roadway 611 as a road surface.

(3.2) Noise Removal Processing

Hereinafter, the noise removal processing (in the step S4 of FIG. 3) to be executed by the noise processor 14 will be described in more detail.

In the noise removal processing, the noise processor 14 corrects the distance information D3 to reduce the noise included in the distance information D3, using one or more pieces of information selected from the group consisting of the first brightness information D1 and the second brightness information D2 received from the first composition part 21. More specifically, it is considered a first case that the distance information D3 and the second brightness information D2 are used, and a second case that the distance information D3 and the composite image of the first brightness information D1 and the second brightness information D2 are used. Information obtained from the outputs of the second pixels 32 is used even in any of the first case or the second case. Therefore, it is possible to remove the noise in the distance information D3 without a consideration of the temporal gap between the second brightness information D2 and the distance information D3.

On the other hand, it is also considered a case that the first brightness information D1 and the distance information D3 are used. In this case, pixels that output information of the first brightness information D1 are the first pixels 31, while pixels that output information of the distance information D3 are the second pixels 32. Therefore, the temporal gap may occur between the first brightness information D1 and the distance information D3. In this case, the temporal gap between the first brightness information D1 and the distance information D3 is corrected based on a prescribed offset value, and then the noise removal in the distance information D3 is performed. Thus, the correction to reduce the noise in the distance information D3 can be realized by using one or more pieces of information selected from the group consisting of the first brightness information D1 and the second brightness information D2.

In this embodiment, the noise processor 14 uses, as filter information, one or more pieces of information selected from the group consisting of the first brightness information D1 and the second brightness information D2 to determine a filter for removing the noise in the distance information D3 that is relatively low in the SN ratio. Specifically, the noise processor 14 performs the edge extraction using the filter, etc. to the composite image received from the first composition part 21 to detect a portion where the pixel value (brightness) changes abruptly to extract a candidate area of the object Ob1.The noise processor 14 determines the filter to be applied to the distance information D3 based on the area extracted from such the composite image. As an example, the noise processor 14 adopts points in which the variation of distance is in a range of 1.0 [m] for an area where a person is estimated to be present from the composite image, and performs filtering such that points outside this range are defined as error values.

As a result, the accuracy of the filter can be more easily improved and the noise in the distance information D3 can be more efficiently removed, as compared with a case that filtering is performed by determining a range of error values from only the distance information D3.

(3.3) Separation Processing

Hereinafter, the separation processing (in the step S5 of FIG. 3) to be executed by the separator 16 will be described in more detail.

In the separation processing, the separator 16 separates the object Ob1 from the peripheral area located around the object Ob1 for the distance information D3 (point cloud) after the coordinate conversion, received from the coordinate converter 15. More specifically, the separator 16 first determines that points with absolute heights (the coordinate values in the Z-coordinate) equal to or lower than a predetermined height correspond to the road surface 61 as the peripheral region. The separator 16 then performs clustering of grouping two or more points higher than the predetermined height and within a predetermined range, and obtains a "plane" including the two or more points in the same group and a "normal line" of the plane. Here, if the inclination of the normal line with respect to the vertical direction (Z-axis) is equal to or less than a predetermined value, and the area of the plane is equal to or greater than a prescribed area, the separator 16 determines the obtained "plane" as the road surface 61.

The separator 16 is configured to obtain the inclination and the irregularities, etc. of the road surface 61 also for the distance information D3 determined as the peripheral area, based on the inclination of the normal line with respect to the vertical direction (Z-axis). Thus, the separator 16 can output, as the road surface information D12, information about the peripheral area, including the inclination and the irregularities, etc. of the road surface 61. That is to say, the road surface information D12 includes information about at least one of the inclination or the irregularities of the road surface 61 included in the peripheral area.

(3.4) 3D Object Detection Processing

Hereinafter, the 3D object detection processing (in the step S7 of FIG. 3) to be executed by the 3D object detector 17 will be described in more detail.

In the 3D object detection processing, the 3D object detector 17 detects the object Ob1 based on the distance information D3 received from the separator 16. In this embodiment, the 3D object detector 17 determines whether or not the object Ob1 is present for the distance information D3 (point cloud) in a state where the peripheral area is removed. More specifically, the 3D object detector 17 determines whether or not the object Ob1 is present based on the density of points in the point cloud, for example. That is to say, if the density of points in the point cloud is equal to or more than a threshold, the 3D object detector 17 determines that the object Ob1 is present at a position corresponding to those points. On the other hand, if the density of points in the point cloud is less than the threshold, the 3D object detector 17 determines that no object Ob1 is present at the position corresponding to those points.

Alternatively, for example, the 3D object detector 17 may perform clustering of grouping two or more points within a predetermined range, and determine whether or not the object Ob1 is present, based on the size (i.e., the area) of a "plane" including the two or more points in the same group. In this case, if the area is equal to or greater than a threshold, the 3D object detector 17 determines that the object Ob1 is present at the position corresponding to those points. On the other hand, if the area is less than the threshold, the 3D object detector 17 determines that no object Ob1 is present at the position corresponding to those points.

In this embodiment, as described above, the distance information D3 is corrected in the noise removal processing before the 3D object detection processing, using one or more pieces of information selected from the group consisting of the first brightness information D1 and the second brightness information D2. Therefore, the detection of the object Ob1 is performed in the 3D object detection processing, using not only the distance information D3 but also indirectly one or more pieces of information selected from the group consisting of the first brightness information D1 and the second brightness information D2.

In the 3D object detection processing, the 3D object detector 17 determines information about the position in the monitoring area A1, of the object Ob1, and information about the attribute of the object Ob1, in addition to the presence or absence of the object Ob1.That is to say, when determining that the object Ob1 is present, the 3D object detector 17 further determines the position and the attribute of the object Ob1 in the 3D object detection processing. In this embodiment, the attribute of the object Ob1 to be determined in the 3D object detection processing is assumed to include only the size of the object Ob1, for example.

(3.5) 2D Object Detection Processing

Hereinafter, the 2D object detection processing (in the step S8 of FIG. 3) to be executed by the 2D object detector 20 will be described in more detail.

In the 2D object detection processing, the 2D object detector 20 detects the object Ob1 based on one or more pieces of information selected from the group consisting of the first brightness information D1 and the second brightness information D2, received from the first composition part 21. Basically, the 2D object detector 20 determines whether or not the object Ob1 is present based on the degree of similarity between each of two or more templates for various objects Ob1 and a partial image of the brightness image to be compared with a corresponding template while moving each of the two or more templates on the brightness image. That is to say, if the degree of coincidence between the partial image and a certain template of the two or more templates is equal to or greater than a threshold, the 2D object detector 20 determines that the object Ob1 corresponding to the certain template is present at a position corresponding to the partial image. On the other hand, if the degree of coincidence between the partial image and each of the two or more templates is less than the threshold, the 2D object detector 20 determines that no object Ob1 is present at the position corresponding to the partial image.

Alternatively, the 2D object detector 20 may detect the object Ob1 based on one or more pieces of information selected from the group consisting of the first brightness information D1 and the second brightness information D2, using a Histograms of Oriented Gradients (HOG) feature quantity, a Convolutional Neural Network (CNN), or the like.

In the 2D object detection processing, the 2D object detector 20 determines information about the position in the monitoring area A1, of the object Ob1, and information about the attribute of the object Ob1, in addition to the presence or absence of the object Ob1.That is to say, when determining that the object Ob1 is present, the 2D object detector 20 further determines the position and the attribute of the object Ob1 in the 2D object detection processing. In this embodiment, the attribute of the object Ob1 to be determined in the 2D object detection processing is assumed to include the size and the type of the object Ob1, for example.

Thus, the detection of the object Ob1 in the 2D object detection process is performed by a means different from that of the 3D object detection process.

(3.6) Composition Processing

Hereinafter, the composition processing (in the step S9 of FIG. 3) to be executed by the compositor 18 will be described in more detail.

In the composition processing, the compositor 18 composes the detection result of the 2D object detector 20 and the detection result of the 3D object detector 17. That is to say, the detection result of the 3D object detection processing is the detection result about the object Ob1, obtained based on at least the distance information D3, and the detection result of the 2D object detection processing is the detection result about the object Ob1, obtained based on at least the first brightness information D1 or the second brightness information D2.

In the 3D object detection processing, the detection of the object Ob1 is performed based on the distance information D3, which is generated by the infrared light emitted from the light emitting unit 4 being reflected by the object Ob1 and input to the second pixels 32. For this reason, there is the probability that the object Ob1 cannot be detected, if it is relatively low in the reflectance to the infrared light. On the other hand, since the distance information D3 is not used in the 2D object detection processing, the object Ob1 cannot be detected as a three dimensional object reflecting the distance between the image sensor 3 and the object Ob1. In the composition processing, it is possible to obtain a detection result about the object Ob1 complementing the respective disadvantages of the detection results of the 3D object detection processing and the 2D object detection processing, by composing the detection results. That is to say, even if the object Ob1 is relatively low in the reflectance to the infrared light, it can be detected as the three dimensional object reflecting the distance between the image sensor 3 and the object Ob1.

Specifically, the compositor 18 corrects the detection result of the 3D object detection processing (the detection result about the object Ob1 based on the distance information D3), using the detection result of the 2D object detection processing (the detection result about the object Ob1 based on the first brightness information D1 or the second brightness information D2). For example, when the object Ob1 includes a portion having a low reflectance to the infrared light, a point(s) corresponding to the portion of the object Ob1 may be lost in the detection result (point cloud) of the 3D object detection processing. Accordingly, in the composition processing, the compositor 18 corrects (complements) the detection result of the 3D object detection processing based on the detection result of the 2D object detection processing to complement the lost point(s).

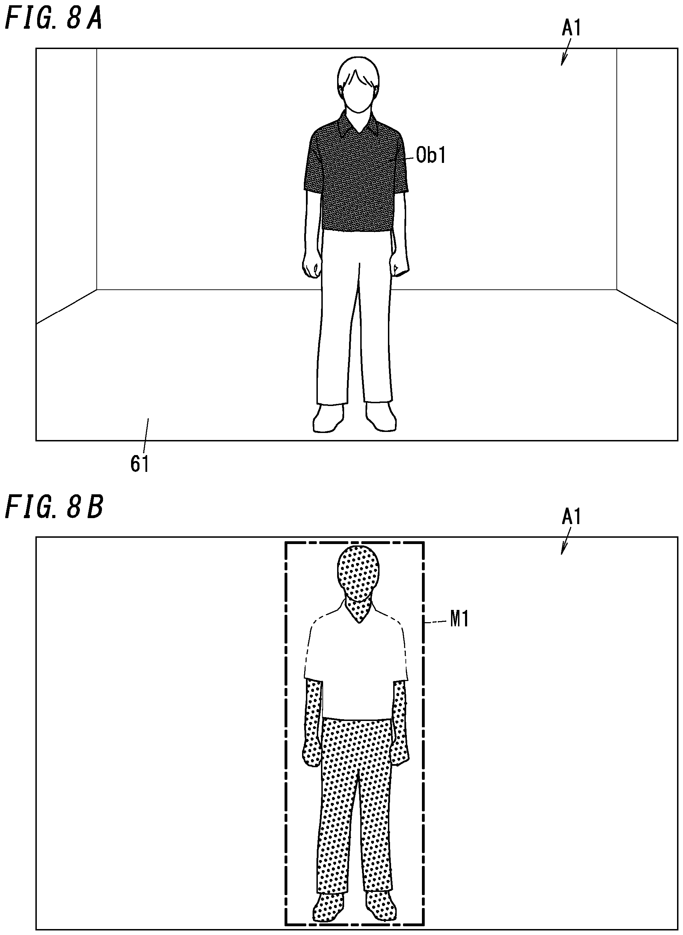

FIGS. 8A and 8B are explanatory drawings schematically illustrating a state in which the detection result of the 3D object detection processing is corrected (complemented) by the composition processing. In the example of the FIGS. 8A and 8B, it is assumed that a scene in which a road surface 61 and a person (object Ob1) are present in the monitoring area A1. In addition, it is assumed that the outerwear worn by the person (object Ob1) is relatively low in the reflectance to the infrared light.

In this case, when the image of the monitoring area A1 as shown in FIG. 8A is captured by the image sensor 3, points corresponding to the upper body (body) of the person (object Ob1) may be lost in the detection result (point cloud) of the 3D object detection processing, as shown in FIG. 8B. In FIG. 8B, the upper body (body) corresponding the lost points, of the person (object Ob1), is expressed by an imaginary line (two-dot chain line). In this case, data as shown in FIG. 8B is obtained by superimposing a marker M1 shaped like a frame surrounding the object Ob1 in the detection result of the 2D object detection processing on the detection result of the 3D object detection processing. Then, in the composition processing, the detection result of the 3D object detection processing is corrected (complemented) in the following flow.

That is to say, the compositor 18 first obtains a representative value (e.g., a mean value, a median value or a mode value, etc.) of the distance to the object Ob1 based on a plurality of points present in the area surrounded by the marker M1. The compositor 18 further adjusts a position of the marker M1 such that a position of a lower end of the marker M1 matches with the representative value of the distance obtained. For example, if the representative value of the distance obtained is 5.0 [m], the compositor 18 adjusts the position of the marker M1 such that the position of the lower end of the marker M1 on the road surface 61 (corresponding to the foot of the person) matches with a position of 5.0 [m]. Then, the compositor 18 determines that the points present in the area surrounded by the marker M1, of the detection result (point cloud) of the 3D object detection processing, are the target information D11 corresponding to the object Ob1. At this time the compositor 18 may complement the lost points, namely the points corresponding to the upper body (body) of the person (object Ob1).

As described above, in the composition processing, the detection result of the 3D object detection processing (the distance information D3 corresponding to the object Ob1) can be corrected, using the detection result of the 2D object detection processing. Thus, the detection result of the object Ob1 (the target information D11) can be obtained with further improved accuracy, as compared with the 3D object detection processing.

Furthermore, in this embodiment, the attribute of the object Ob1 in the 3D object detection processing includes only the size of the object Ob1, whereas the attribute of the object Ob1 in the 2D object detection processing includes the size and the type of the object Ob1. Therefore, the corrected detection result obtained by the composition processing preferably includes not only the size of the object Ob1 but also the type of the object Ob1, as the attribute of the object Ob1.

(4) Variations

The first embodiment is only one example of various embodiments according to the present disclosure. The first embodiment may be readily modified in various manners depending on a design choice or any other factor, as long as the purpose of the present disclosure can be attained. The drawings to be referred to in the description of the present disclosure are all schematic representations. That is to say, the ratio of the dimensions (including thicknesses) of respective constituent elements illustrated on the drawings does not always reflect their actual dimensional ratio. Also, the functions similar to the information processing system 1 according to the first embodiment may also be implemented as, for example, an information processing method, a computer program, or a non-transitory storage medium that stores the computer program. An information processing method according to one aspect is a method to process information to be received from an image sensor 3. The information processing method includes a first acquisition processing (corresponding to the "step S1" of FIG. 3), a second acquisition processing (corresponding to the "step S2" of FIG. 3) and a third acquisition processing (corresponding to the "step S2" of FIG. 3). The image sensor 3 has a first pixel 31 having sensitivity for visible light, and a second pixel 32 having sensitivity for infrared light. The first acquisition processing includes acquiring first brightness information D1 from the first pixel 31. The first brightness information D1 relates to a pixel value of the first pixel 31. The second acquisition processing includes acquiring second brightness information D2 from the second pixel 32. The second brightness information relates to a pixel value of the second pixel 32. The third acquisition processing includes acquiring distance information D3 from the second pixel 32. The distance information D3 relates to a distance between the image sensor 3 and an object Ob1 by which the infrared light is reflected. A program according to one aspect is designed to cause one or more processors to execute the information processing method described above.

(4.1) First Variation

As a first variation of the first embodiment, the compositor 18 is not limited to change the detection result about the object Ob1 based on the distance information D3, using the detection result about the object Ob1 based on the first brightness information D1. For example, the compositor 18 may change the detection result about the object Ob1 based on the first brightness information D1, using the detection result about the object Ob1 based on the distance information D3. In other words, the compositor 18 may correct the detection result of the 2D object detector 20 (the detection result about the object Ob1 based on the first brightness information D1), using the detection result of the 3D object detector 17 (the detection result about the object Ob1 based on the distance information D3).

In this case, as long as the compositor 18 "changes" the detection result of the object Ob1 based on the first brightness information D1, the specific aspect of the "change" is not limited to the correction (including the complement). For example, the compositor 18 may "change" the detection result about the object Ob1 based on the first brightness information D1 by controlling the signal processor 5 to add a change to the first brightness information D1 as the origin. As one specific example, the compositor 18 may change the first brightness information D1 to be obtained from the image sensor 3 (first pixels 31) by adjusting the exposure time or the frame rate of the image sensor 3. Thus, for example, even when it is difficult to detect the object Ob1 from the first brightness information D1 due to underexposure (black spot), overexposure (white spot), or the like, the first brightness information D1 itself can be changed to a state in which the object Ob1 can be easily detected. Therefore, the detection result about the object Ob1 based on the first brightness information D1 is changed.

(4.2) Second Variation

An information processing system 1 according to a second variation of the first embodiment has a function of correcting the time difference between the first brightness information D1 and the second brightness information D2.

That is to say, since the first brightness information D1 and the second brightness information D2 are obtained from the outputs of the first pixels 31 and the second pixels 32, respectively, the temporal gap may occur between the first brightness information D1 and the second brightness information D2. Accordingly, it is preferable to correct the time difference between the first brightness information D1 and the second brightness information D2 so as to reduce the temporal gap between the first brightness information D1 and the second brightness information D2.

As an example, the function of correcting the time difference between the first brightness information D1 and the second brightness information D2 is provided at each of the first composition part 21 and the second composition part 22, or at the preceding stage of each of them. Since the second brightness information D2 is completely synchronized temporally with the distance information D3, it is preferable to correct the first brightness information D1 so as to match with the timing of the second brightness information D2. In this case, since the timing of the second brightness information D2 does not deviate, the relationship between the second brightness information D2 and the distance information D3 is maintained.

Thus, the information processing system 1 corrects the time difference between the first brightness information D1 and the second brightness information D2, which can realize improving the accuracy in the processing of using both the first brightness information D1 and the second brightness information D2, for example, the processing in the first composition part 21 and the second composition part 22.

(4.3) Third Variation

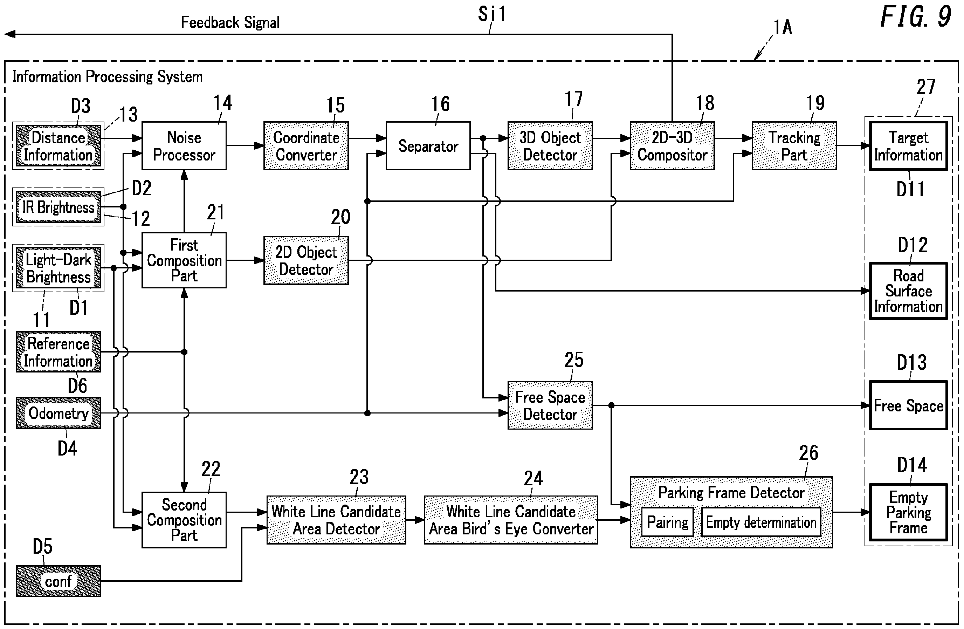

An information processing system 1A according to a third variation of the first embodiment differs from the information processing system 1 according to the first embodiment in that the second brightness information D2 is directly input to the noise processor 14, as illustrated in FIG. 9.

Specifically, the noise processor 14 in this variation is connected to the second acquirer 12, instead of connected to the first composition part 21. That is to say, the noise processor 14 is connected to the second acquirer 12 and the third acquirer 13. Thus, the second brightness information D2 in the information processing system 1 according to the first embodiment is input to the noise processor 14 not directly but indirectly via the first composition part 21, whereas the second brightness information D2 in this variation is directly input to the noise processor 14. Also in this variation, the noise processor 14 corrects the distance information D3, using the distance information D3 and the second brightness information D2.

(4.4) Fourth Variation

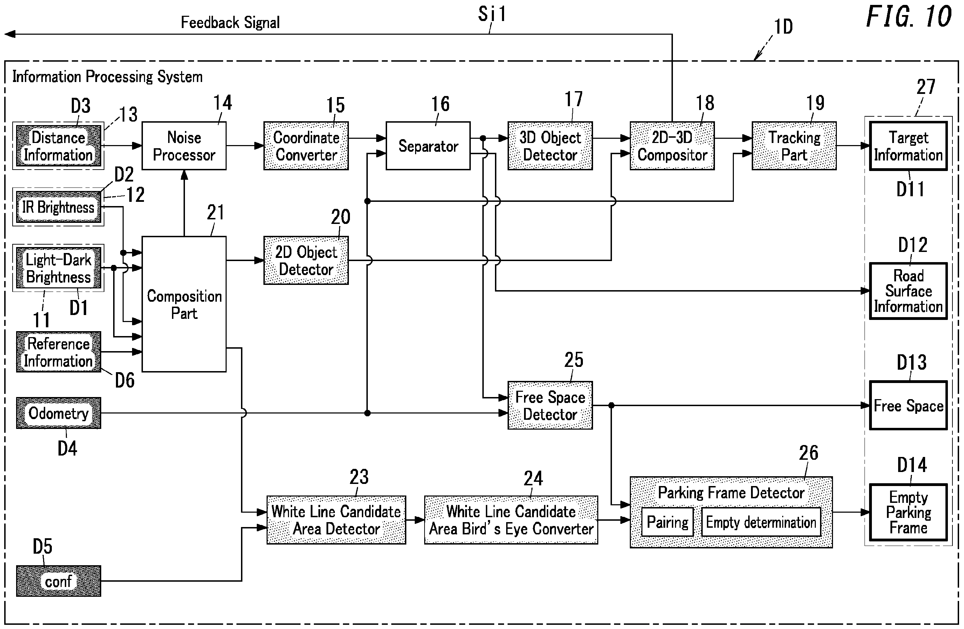

An information processing system 1D according to a fourth variation of the first embodiment differs from the information processing system 1 according to the first embodiment in that it includes a composition part 200, instead of the first composition part 21 and the second composition part 22, as illustrated in FIG. 10.

That is to say, the composition part 200 in this variation also serves as two functions of the first composition part 21 and the second composition part 22. In other words, the composition part 200 is constituted by the first composition part 21 and the second composition part 22 being integrated. According to this variation, it is possible to simplify the processing in the information processing system 1D.

(4.5) Fifth Variation

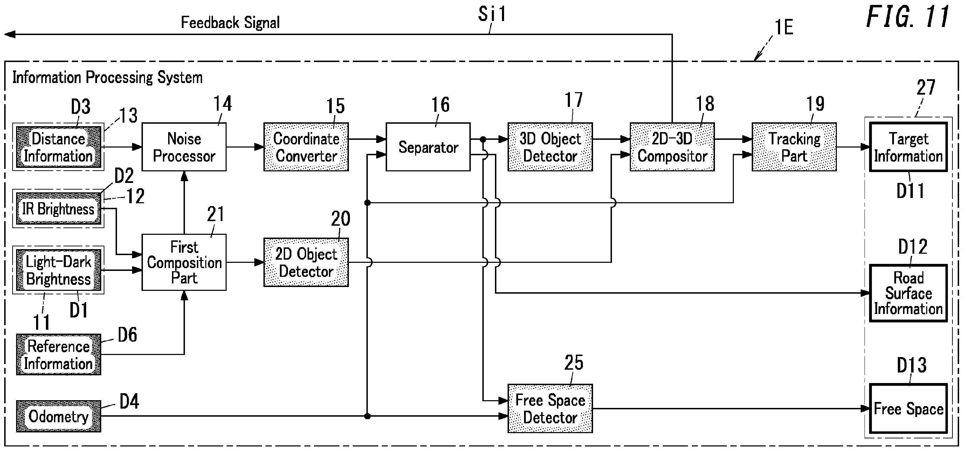

An information processing system 1E according to a fifth variation of the first embodiment differs from the information processing system 1 according to the first embodiment in that the second composition part 22, the white line candidate area detector 23 and the white line candidate area bird's eye converter 24 are omitted from the components, as illustrated in FIG. 11.

That is to say, in this variation, the detection of the empty parking frame by the parking frame detector 26 is not performed. Therefore, the empty parking frame information D14 is not outputted to the output part 27. According to this variation, it is possible to simplify the processing in the information processing system IE.

(4.6) Other Variations

Hereinafter, variations other than the first, second and third variations of the first embodiment will be listed. The variations described below, the first, second and third variations may be adopted in combination as appropriate.

The information processing system 1 according to the present disclosure includes a computer system. The computer system may include a processor and a memory as principal hardware components. The functions of the information processing system 1 according to the present disclosure may be performed by making the processor execute a program stored in the memory of the computer system. The program may be stored in advance in the memory of the computer system. Alternatively, the program may also be downloaded through a telecommunications line or be distributed after having been recorded in some non-transitory storage medium such as a memory card, an optical disc, or a hard disk drive, any of which is readable for the computer system. The processor of the computer system may be implemented as a single or a plurality of electronic circuits including a semiconductor integrated circuit (IC) or a large-scale integrated circuit (LSI). As used herein, the "integrated circuit" such as an IC or an LSI is called by a different name depending on the degree of integration thereof. Examples of the integrated circuits include a system LSI, a very large-scale integrated circuit (VLSI), and an ultra-large scale integrated circuit (ULSI). Optionally, a field-programmable gate array (FPGA) to be programmed after an LSI has been fabricated or a reconfigurable logic device allowing the connections or circuit sections inside of an LSI to be reconfigured may also be adopted as the processor. Those electronic circuits may be either integrated together on a single chip or distributed on multiple chips, whichever is appropriate. Those multiple chips may be integrated together in a single device or distributed in multiple devices without limitation. As used herein, the "computer system" includes a microcontroller including one or more processors and one or more memories. Thus, the microcontroller may also be implemented as a single or a plurality of electronic circuits including a semiconductor integrated circuit or a large-scale integrated circuit.

Also, at least some functions of the information processing system 1 are integrated together in a single housing, but this is not an essential configuration for the information processing system 1. The plurality of components of the information processing system 1 may be distributed in multiple different housings. For example, in the information processing system 1, the first acquirer 11, the second acquirer 12 and the third acquirer 13 may be integrated together in a first housing separate from a second housing where the output part 27 is provided. Still alternatively, at least some functions of the information processing system 1 may be implemented as a cloud computing system as well.

Conversely, at least some functions of the plurality of functions distributed in multiple different devices in the first embodiment may be integrated together in a single housing. For example, the functions distributed as the information processing system 1 and the signal processor 5 may be integrated together in a single housing.

The output aspect of various information by the output part 27 is not limited to outputting to the control system 2. For example, the output part 27 may output various information such as the target information D11 by transmitting to an information terminal, displaying, outputting sound (including voice), recording (writing) to a non-transitory recording medium, or printing (printout), etc.

The moving body mounting the information processing system 1 and the sensor system 10 is not limited to an automobile (four-wheeled vehicle), but may be for example a two-wheeled vehicle, a train, an electric cart, a construction machine, a drone, an aircraft or a ship, etc.

The information processing system 1 and the sensor system 10 are not limited to be applied for the moving body, but may be applied for surveying applications, security applications or disaster prevention applications, etc. In this case, the information processing system 1 and the sensor system 10 may be installed in a fixed position indoors or outdoors.

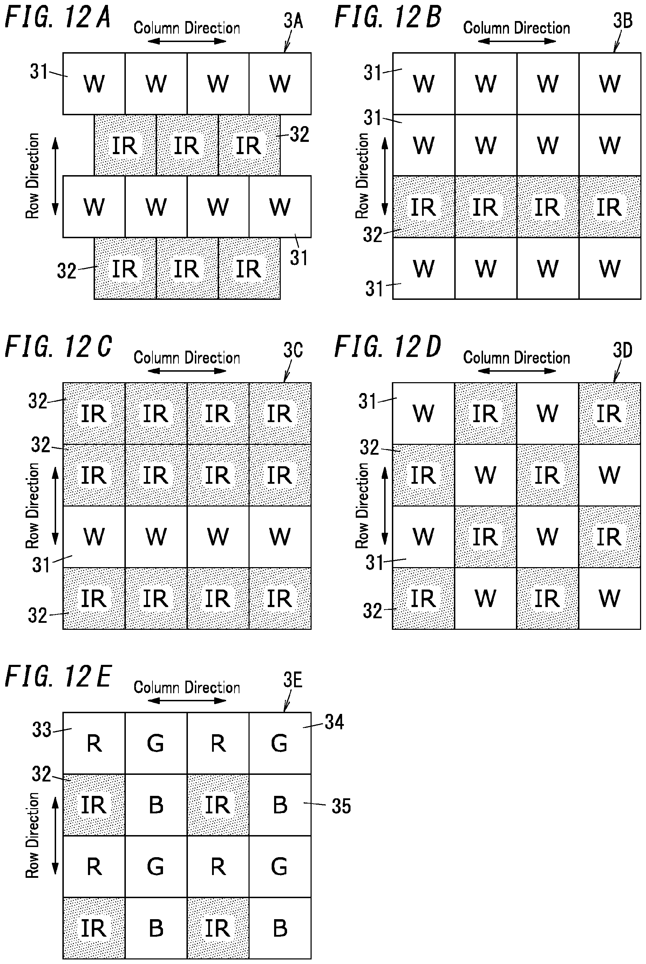

The arrangement of two or more first pixels 31 and two or more second pixels 32 of the image sensor 3 is not limited to the example shown in FIG 1B. For example, in each of some rows, a plural number of the first pixels 31 may be arranged in the row direction (vertical direction) of the light receiving surface, and in each of another rows, a plural number of the second pixels 32 may be arranged in the row direction (vertical direction) of the light receiving surface. Also, the first pixels 31 and the second pixels 32 may be alternately arranged in the column direction (horizontal direction) of the light receiving surface. As an image sensor 3A illustrated in FIG. 12A, columns of two or more first pixels 31 and columns of two or more second pixels 32, alternately arranged in the row direction of the light receiving surface, may be arranged offset from each other in the column direction. Alternatively, as an image sensor 3B illustrated in FIG. 12B, two or more first pixels 31 arranged in the column direction of the light receiving surface and two or more second pixels 32 arranged in the column direction may be arranged in the order of a column of first pixels 31, a column of first pixels 31, a column of second pixels 32 and a column of first pixels 31 in the row direction of the light receiving surface. Still alternatively, as an image sensor 3C illustrated in FIG. 12C, two or more first pixels 31 arranged in the column direction of the light receiving surface and two or more second pixels 32 arranged in the column direction may be arranged in the order of a column of second pixels 32, a column of second pixels 32, a column of first pixels 31 and a column of second pixels 32 in the row direction of the light receiving surface. Still alternatively, as an image sensor 3D illustrated in FIG. 12D, two or more first pixels 31 and two or more second pixels 32 may be arranged zigzag to be alternately disposed in both the row direction and the column direction of the light receiving surface. Still alternatively, as an image sensor 3E illustrated in FIG. 12E, first pixels may include three colored pixels of a R, G, B for forming a color image. That is to say, the first pixels of the image sensor 3E may include R pixels 33 having sensitivity for red light, G pixels 34 having sensitivity for green light, and B pixels 35 sensitivity for blue light. Still alternatively, the image sensor 3 is not limited to a configuration in which two or more first pixels 31 and two or more second pixels 32 are two-dimensionally arranged, but may be configured such that two or more first pixels 31 and two or more second pixels 32 are aligned in one line, as a line sensor, for example.

How to obtain the distance information D3 is not limited to the method of using the intensity modulated light. For example, the distance information D3 may be obtained simply based on a time from when the light emitting unit 4 emits light to when the second pixels 32 of the image sensor 3 receive the light (infrared light).

The information used by the 2D object detector 20 or the 3D object detector 17 for detecting the object Ob1 is not limited to the first brightness information D1, the second brightness information D2 or the distance information D3. For example, the odometry information D4, etc. may be used together with those information, as appropriate.

The information processing system 1 has the plurality of operation modes including at least the parking space detection mode and the object detection mode. However, this is only an example and should not be construed as limiting. For example, the information processing system 1 may have only either the parking space detection mode or the object detection mode. Alternatively, the information processing system 1 may have an operation mode other than the parking space detection mode or the object detection mode.

At least one pair of: the image sensor 3 and the signal processor 5; the signal processor 5 and the information processing system 1; and the information processing system 1 and the control system 2 may be installed such that corresponding two elements paired are indirectly connected to each other, as long as the corresponding two elements paired are communicable with each other. The term "communicable" referred to in the present disclosure means that signals can be transmitted or received directly or indirectly via a network or a relay, etc., by an appropriate communication method of wired or wireless communication.

(Second Embodiment)

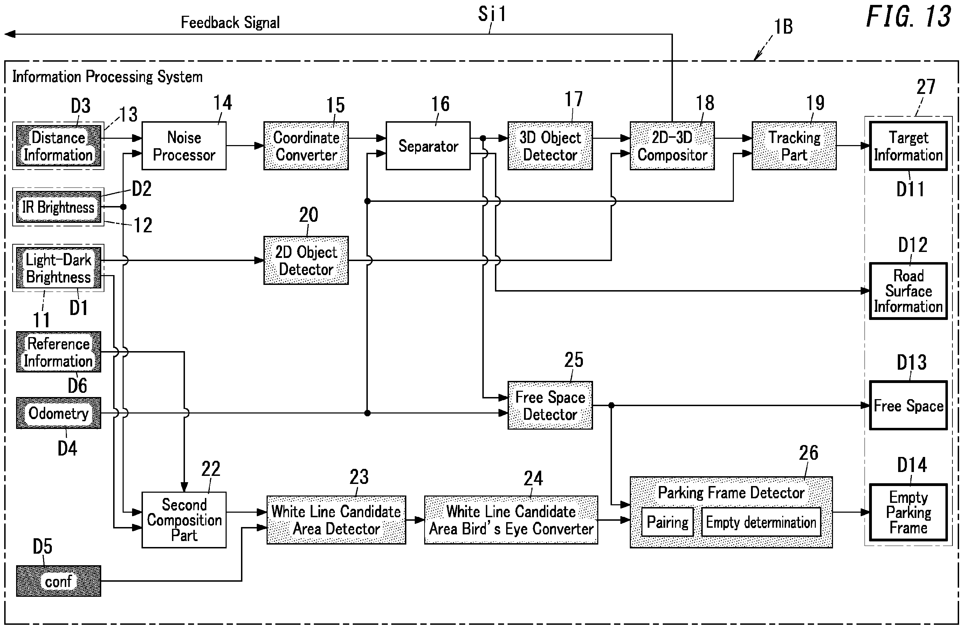

As illustrated in FIG. 13, an information processing system 1B according to this embodiment differs from the information processing system 1 according to the first embodiment in that the first composition part 21 (see FIG. 2) is omitted from the components. In the following description, any components of this embodiment similar to those of the first embodiment will be designated by the same reference signs, and description thereof will be omitted as appropriate herein.

In this embodiment, since the first composition part 21 is omitted from the components of the information processing system 1B, the second brightness information D2 is directly input to the noise processor 14, similarly to the information processing system 1A (see FIG. 9) according to the third variation of the first embodiment. That is to say, in this embodiment, the noise processor 14 is connected to the second acquirer 12 and the third acquirer 13. Also in this embodiment, the noise processor 14 corrects the distance information D3, using the distance information D3 and the second brightness information D2.

Furthermore, the 2D object detector 20 in this embodiment is connected to the first acquirer 11. Therefore, the first brightness information D1 is directly input to the 2D object detector 20, and the 2D object detector 20 detects the object Ob1, directly using the first brightness information D1. The 2D object detector 20 detects the object Ob1 in the monitoring area A1, using only the first brightness information D1, of the first brightness information D1 and the second brightness information D2. The detection result of the 2D object detector 20 is input together with the detection result of the 3D object detector 17 to the compositor 18.

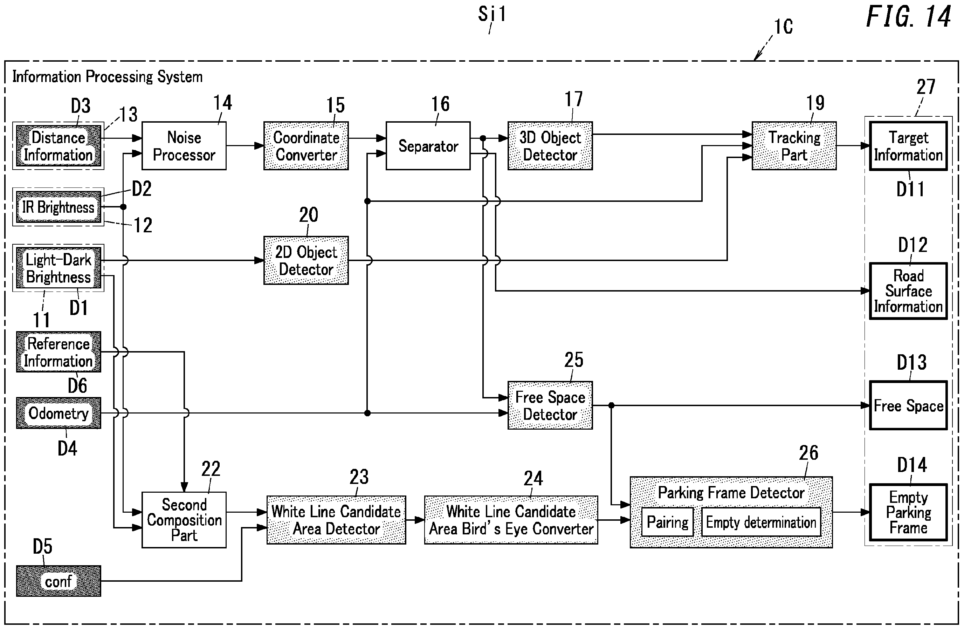

FIG. 14 shows an information processing system 1C according to a variation of the second embodiment. The information processing system 1C differs from the information processing system 1B according to the second embodiment in that the compositor 18 is omitted from the components. In this variation, the detection results of the 2D object detector 20 and the 3D object detector 17 are directly input to the tracking part 19. Therefore, the tracking part 19 tracks the object Ob1 present in the monitoring area A1 based on either the detection result of the 2D object detector 20 or the detection result of the 3D object detector 17.

The various configurations (including the variations) in the second embodiment may be adopted in combination with the various configurations (including the variations) in the first embodiment, as appropriate.

(Recapitulation)

As can be seen from the foregoing description, an information processing system (1, 1A to 1C) according to a first aspect is applied for an image sensor (3, 3A to 3E) having a first pixel (31) and a second pixel (32). The information processing system (1, 1A to 1C) includes a first acquirer (11), a second acquirer (12) and a third acquirer (13). The first pixel (31) has sensitivity for visible light. The second pixel (32) has sensitivity for infrared light. The first acquirer (11) is configured to acquire first brightness information (D1) from the first pixel (31). The first brightness information (D1) relates to a pixel value of the first pixel (31). The second acquirer (12) is configured to acquire second brightness information (D2) from the second pixel (32). The second brightness information (D2) relates to a pixel value of the second pixel (32). The third acquirer (13) is configured to acquire distance information (D3) from the second pixel (32). The distance information (D3) relates to a distance between the image sensor (3, 3A to 3E) and an object (Ob1) by which the infrared light is reflected.

According to this aspect, three types of information (the first brightness information (D1), the second brightness information (D2) and the distance information (D3)) can be acquired from two types of pixels (the first pixel (31) and the second pixel (32)) provided for the single image sensor (3, 3A to 3E). Although the first brightness information (D1), the second brightness information (D2) and the distance information (D3) are different information from one another, they have a correlation with one another by being obtained from the single image sensor (3, 3A to 3E). In particular, since both the second brightness information (D2) and the distance information (D3) are acquired from the second pixel (32), they have a strong correlation therebetween. Therefore, the information processing system (1, 1A to 1C) can obtain, for example, various information relating to a state of a monitoring area (A1) within an angle of view of the image sensor (3, 3A to 3E) from the three types of information with relatively high accuracy. Consequently, the information processing system (1, 1A to 1C) can realize improving the accuracy in the information processing.

In an information processing system (1, 1A to 1C) according to a second aspect, which may be implemented in conjunction with the first aspect, the first brightness information (D1) includes light and darkness information representing intensity of light input to the first pixel (31).

According to this aspect, the information processing system (1, 1A to 1C) can realize improving the accuracy in the information processing even without using a color image.

An information processing system (1, 1A to 1C) according to a third aspect, which may be implemented in conjunction with the first or the second aspect, further includes a three dimensional object detector (17). The three dimensional object detector (17) is configured to detect the object (Ob1) based on the distance information (D3).

According to this aspect, the information processing system (1, 1A to 1C) can three-dimensionally detect the object (Ob1) based on the distance information (D3).

In an information processing system (1, 1A to 1C) according to a fourth aspect, which may be implemented in conjunction with the third aspect, the three dimensional object detector (17) is configured to detect the object (Ob1)

based on not only the distance information (D3) but also one or more pieces of information selected from the group consisting of the first brightness information (D1) and the second brightness information (D2).

According to this aspect, the information processing system (1, 1A to 1C) can realize further improving the detection accuracy even while the object (Ob1) can be three-dimensionally detected, as compared with detection based on only the distance information (D3).

In an information processing system (1, 1A to 1C) according to a fifth aspect, which may be implemented in conjunction with the third aspect, the three dimensional object detector (17) is configured to detect the object (Ob1) based on not only the distance information (D3) but also the first brightness information (D1) corrected so as to match with a timing of the second brightness information (D2).

According to this aspect, the information processing system (1, 1A to 1C) can realize further improving the detection accuracy even while the object (Ob1) can be three-dimensionally detected, as compared with detection based on only the distance information (D3).

An information processing system (1, 1A to 1C) according to a sixth aspect, which may be implemented in conjunction with any one of the first to fifth aspects, further includes a two dimensional object detector (20). The two dimensional object detector (20) is configured to detect the object (Ob1) based on one or more pieces of information selected from the group consisting of the first brightness information (D1) and the second brightness information (D2).

According to this aspect, the information processing system (1, 1A to 1C) can two-dimensionally detect the object (Ob1) based on the first brightness information (D1).

In an information processing system (1, 1A to 1C) according to a seventh aspect, which may be implemented in conjunction with any one of the first to sixth aspects, the distance information (D3) includes information obtained by a Time-of-Flight method.

According to this aspect, the information processing system (1, 1A to 1C) can realize obtaining the distance information (D3) with a relatively simple configuration.

An information processing system (1, 1A to 1C) according to an eighth aspect, which may be implemented in conjunction with any one of the first to seventh aspects, further includes a noise processor (14). The noise processor (14) is configured to correct the distance information (D3) based on the distance information (D3) and one or more pieces of information selected from the group consisting of the first brightness information (D1) and the second brightness information (D2).

According to this aspect, the distance information (D3) is corrected based on the distance information (D3) and the second brightness information (D2). Consequently, the information processing system (1, 1A to 1C) can realize reducing the noise included in the distance information (D3).

An information processing system (1, 1A to 1C) according to a ninth aspect, which may be implemented in conjunction with any one of the first to eighth aspects, further includes a compositor (18). The compositor (18) is configured to compose: a two dimensional detection result for the object (Ob1) based on one or more pieces of information selected from the group consisting of the first brightness information (D1) and the second brightness information (D2); and a three dimensional detection result for the object (Ob1) based on at least the distance information (D3).

This aspect can realize the detection, etc. of the object (Ob1) based on both the distance information (D3) and the one or more pieces of information selected from the group consisting of the first brightness information (D1) and the second brightness information (D2).

In an information processing system (1, 1A to 1C) according to a tenth aspect, which may be implemented in conjunction with the ninth aspect, the compositor (18) is configured to compose the two dimensional detection result and the three dimensional detection result by making a correction of the three dimensional detection result based on the two dimensional detection result.

According to this aspect, the information processing system (1, 1A to 1C) can obtain, with the compositor (18), the three dimensional detection result corrected based on the two dimensional detection result.

In an information processing system (1, 1A to 1C) according to an eleventh aspect, which may be implemented in conjunction with the ninth or tenth aspect, the compositor (18) is configured to output a feedback signal (Si1) to a sensor system (10) including the image sensor (3, 3A to 3E). The image sensor (3, 3A to 3E) is configured to output an electrical signal in which one or more parameters selected from the group consisting of an exposure time and a frame rate are changed in response to the feedback signal (Si1).

According to this aspect, the information processing system (1, 1A to 1C) can change a parameter of the image sensor (3, 3A to 3E), using the feedback signal (Si1).

An information processing system (1, 1A to 1C) according to a twelfth aspect, which may be implemented in conjunction with any one of the ninth to eleventh aspects, further includes a tracking part (19). The tracking part (19) is configured to output target information (D11) relating to the object (Ob1) based on an output of the compositor (18).

According to this aspect, the information processing system (1, 1A to 1C) can obtain the target information (D11) relating to the object (Ob1).

In an information processing system (1, 1A to 1C) according to a thirteenth aspect, which may be implemented in conjunction with the twelfth aspect, the target information (D11) includes one or more pieces of information selected from the group consisting of information about a position of the object (Ob1), information about a moving direction of the object (Ob1), information about a moving speed of the object (Ob1) and information about a type of the object (Ob1).

According to this aspect, the information processing system (1, 1A to 1C) can obtain, as the target information (D11), the one or more pieces of information selected from the group consisting of the information about the position, the information about the moving direction, the information about the moving speed and the information about the type.

An information processing system (1, 1A to 1C) according to a fourteenth aspect, which may be implemented in conjunction with any one of the first to thirteenth aspects, further includes a separator (16). The separator (16) is configured to separate the object (Ob1) from a peripheral area located around the object (Ob1).

According to this aspect, the information processing system (1, 1A to 1C) can deal with information about the object (Ob1) separated from the peripheral area and information about the peripheral area, individually.

An information processing system (1, 1A to 1C) according to a fifteenth aspect, which may be implemented in conjunction with the fourteenth aspect, further includes a three dimensional object detector (17). The three dimensional object detector (17) is configured to detect the object (Ob1) based on the distance information (D3). The three dimensional object detector (17) is configured to detect the object (Ob1) based on information in which the peripheral area is removed from the distance information (D3).

According to this aspect, the information processing system (1, 1A to 1C) can realize improving the detection accuracy for the object (Ob1) at the three dimensional object detector (17), by using the distance information (D3) from which the peripheral area is removed.

An information processing system (1, 1A to 1C) according to a sixteenth aspect, which may be implemented in conjunction with any one of the first to fifteenth aspects, further has a function of correcting a time difference between the first brightness information (D1) and the second brightness information (D2).

According to this aspect, the information processing system (1, 1A to 1C) can realize further improving the accuracy in the information processing.

An information processing system (1, 1A to 1C) according to a seventeenth aspect, which may be implemented in conjunction with any one of the first to sixteenth aspects, further includes an output part (27). The output part (27) is configured to output an information processing result, obtained based on the first brightness information (D1), the second brightness information (D2) and the distance information (D3). The information processing result relates to a state of a monitoring area (A1) within an angle of view of the image sensor (3, 3A to 3E).

This aspect can realize utilizing the information processing result relating to the state of the monitoring area (A1) within the angle of view of the image sensor (3, 3A to 3E), at a system other than the information processing system (1, 1A to 1C).

In an information processing system (1, 1A to 1C) according to an eighteenth aspect, which may be implemented in conjunction with the seventeenth aspect, the information processing result includes one or more pieces of information selected from the group consisting of the following three types of information. The three types of information are information about whether or not the object (Ob1) is present in the monitoring area (A1), information about a position in the monitoring area (A1), of the object (Ob1) present in the monitoring area (A1), and information about an attribute of the object (Ob1).

This aspect can realize utilizing the information relating to the object (Ob1) in the monitoring area (A1), at a system other than the information processing system (1, 1A to 1C).

A sensor system (10) according to a nineteenth aspect includes the information processing system (1, 1A to 1C) according to any one of the first to eighteenth aspects and the image sensor (3, 3A to 3E).

According to this aspect, three types of information (the first brightness information (D1), the second brightness information (D2) and the distance information (D3)) can be acquired from two types of pixels (the first pixel (31) and the second pixel (32)) provided for the single image sensor (3, 3A to 3E). Although the first brightness information (D1), the second brightness information (D2) and the distance information (D3) are different information from one another, they have a correlation with one another by being obtained from the single image sensor (3, 3A to 3E). In particular, since both the second brightness information (D2) and the distance information (D3) are acquired from the second pixel (32), they have a strong correlation therebetween. Therefore, the information processing system (1, 1A to 1C) can obtain, for example, various information relating to a state of a monitoring area (A1) within an angle of view of the image sensor (3, 3A to 3E) from the three types of information with relatively high accuracy. Consequently, the sensor system (10) can realize improving the accuracy in the information processing in the information processing system (1, 1A to 1C).

An information processing method according to a twentieth aspect is a method to process information to be received from an image sensor (3, 3A to 3E) having a first pixel (31) and a second pixel (32). The information processing method includes a first acquisition processing, a second acquisition processing and a third acquisition processing. The first pixel (31) has sensitivity for visible light. The second pixel (32) has sensitivity for infrared light. The first acquisition processing includes acquiring first brightness information (D1) from the first pixel (31). The first brightness information (D1) relates to a pixel value of the first pixel (31). The second acquisition processing includes acquiring second brightness information (D2) from the second pixel (32). The second brightness information (D2) relates to a pixel value of the second pixel (32). The third acquisition processing includes acquiring distance information (D3) from the second pixel (32). The distance information (D3) relates to a distance between the image sensor (3, 3A to 3E) and an object (Ob1) by which the infrared light is reflected.

According to this aspect, three types of information (the first brightness information (D1), the second brightness information (D2) and the distance information (D3)) can be acquired from two types of pixels (the first pixel (31) and the second pixel (32)) provided for the single image sensor (3, 3A to 3E). Although the first brightness information (D1), the second brightness information (D2) and the distance information (D3) are different information from one another, they have a correlation with one another by being obtained from the single image sensor (3, 3A to 3E). In particular, since both the second brightness information (D2) and the distance information (D3) are acquired from the second pixel (32), they have a strong correlation therebetween. Therefore, in the information processing system (1, 1A to 1C), it is possible to obtain, for example, various information relating to a state of a monitoring area (A1) within an angle of view of the image sensor (3, 3A to 3E) from the three types of information with relatively high accuracy. Consequently, the information processing method can realize improving the accuracy in the information processing in the information processing system (1, 1A to 1C).

A program according to a twenty-first aspect is designed to cause one or more processors to execute the information processing method according to the twentieth aspect.

According to this aspect, three types of information (the first brightness information (D1), the second brightness information (D2) and the distance information (D3)) can be acquired from two types of pixels (the first pixel (31) and the second pixel (32)) provided for the single image sensor (3, 3A to 3E). Although the first brightness information (D1), the second brightness information (D2) and the distance information (D3) are different information from one another, they have a correlation with one another by being obtained from the single image sensor (3, 3A to 3E). In particular, since both the second brightness information (D2) and the distance information (D3) are acquired from the second pixel (32), they have a strong correlation therebetween. Therefore, in the information processing system (1, 1A to 1C), it is possible to obtain, for example, various information relating to a state of a monitoring area (A1) within an angle of view of the image sensor (3, 3A to 3E) from the three types of information with relatively high accuracy. Consequently, the program can realize improving the accuracy in the information processing in the information processing system (1, 1A to 1C).

Not only the above aspects but also various configurations of the information processing system (1, 1A to 1C) according to the first and second embodiments (including the variations) may be implemented as an information processing method, or a computer program.

Note that the constituent elements according to the second to eighteenth aspects are not essential constituent elements for the information processing system (1, 1A to 1C) but may be omitted as appropriate.

**Reference Signs List**

| | |
|---|---|
| 1, 1A to 1C | Information Processing System |
| 3, 3A to 3E | Image Sensor |
| 10 | Sensor System |
| 11 | First Acquirer |
| 12 | Second Acquirer |
| 13 | Third Acquirer |
| 14 | Noise Processor |
| 16 | Separator |
| 17 | Three Dimensional (3D) Object Detector |
| 18 | Compositor |
| 19 | Tracking Part |
| 20 | Two Dimensional (2D) Object Detector |
| 27 | Output Part |
| 31 | First Pixel |
| 32 | Second Pixel |
| A1 | Monitoring Area |
| D1 | First Brightness Information |
| D2 | Second Brightness Information |
| D3 | Distance Information |
| D11 | Target Information |
| Ob1 | Object |
| Si1 | Feedback Signal |

**Claims**

1.  An information processing system to be applied for an image sensor having a first pixel with sensitivity for visible light and a second pixel with sensitivity for infrared light, the information processing system comprising:

    a first acquirer configured to acquire first brightness information relating to a pixel value of the first pixel from the first pixel;
    a second acquirer configured to acquire second brightness information relating to a pixel value of the second pixel from the second pixel; and
    a third acquirer configured to acquire distance information from the second pixel, the distance information relating to a distance between the image sensor and an object by which the infrared light is reflected.

2.  The information processing system of claim 1, wherein
    the first brightness information includes light and darkness information representing intensity of light input to the first pixel.

3.  The information processing system of claim 1 or 2, further comprising a three dimensional object detector configured to detect the object based on the distance information.

4.  The information processing system of claim 3, wherein
    the three dimensional object detector is configured to detect the object based on not only the distance information but also one or more pieces of information selected from the group consisting of the first brightness information and the second brightness information.

5.  The information processing system of claim 3, wherein
    the three dimensional object detector is configured to detect the object based on not only the distance information but also the first brightness information corrected so as to match with a timing of the second brightness information.

6.  The information processing system of any one of claims 1 to 5, further comprising a two dimensional object detector configured to detect the object based on one or more pieces of information selected from the group consisting of the first brightness information and the second brightness information.

7.  The information processing system of any one of claims 1 to 6, wherein
    the distance information includes information obtained by a Time-of-Flight method.

8.  The information processing system of any one of claims 1 to 7, further comprising a noise processor configured to correct the distance information based on the distance information and one or more pieces of information selected from the group consisting of the first brightness information and the second brightness information.

9.  The information processing system of any one of claims 1 to 8, further comprising a compositor configured to compose:

    a two dimensional detection result for the object based on one or more pieces of information selected from the group consisting of the first brightness information and the second brightness information; and
    a three dimensional detection result for the object based on at least the distance information.

10. The information processing system of claim 9, wherein
    the compositor is configured to compose the two dimensional detection result and the three dimensional detection result by making a correction of the three dimensional detection result based on the two dimensional detection result.

11. The information processing system of claim 9 or 10, wherein

    the compositor is configured to output a feedback signal to a sensor system including the image sensor, and the image sensor is configured to output an electrical signal in which one or more parameters selected from the group consisting of an exposure time and a frame rate are changed in response to the feedback signal.

12. The information processing system of any one of claims 9 to 11, further comprising a tracking part configured to output target information relating to the object based on an output of the compositor.

**13.** The information processing system of claim 12, wherein
the target information includes one or more pieces of information selected from the group consisting of information about a position of the object, information about a moving direction of the object, information about a moving speed of the object and information about a type of the object.

**14.** The information processing system of any one of claims 1 to 13, further comprising a separator configured to separate the object from a peripheral area located around the object.

**15.** The information processing system of claim 14, further comprising a three dimensional object detector configured to detect the object based on the distance information, wherein
the three dimensional object detector is configured to detect the object based on information in which the peripheral area is removed from the distance information.

**16.** The information processing system of any one of claims 1 to 15, further having a function of correcting a time difference between the first brightness information and the second brightness information.

**17.** The information processing system of any one of claims 1 to 16, further comprising an output part, wherein

the output part is configured to output an information processing result, obtained based on the first brightness information, the second brightness information and the distance information, and
the information processing result relates to a state of a monitoring area within an angle of view of the image sensor.

**18.** The information processing system of claim 17, wherein
the information processing result includes one or more pieces of information selected from the group consisting of:

information about whether or not the object is present in the monitoring area;
information about a position in the monitoring area, of the object present in the monitoring area; and
information about an attribute of the object.

**19.** A sensor system, comprising the information processing system of any one of claims 1 to 18 and the image sensor.

**20.** An information processing method of processing information to be received from an image sensor having a first pixel with sensitivity for visible light and a second pixel with sensitivity for infrared light, the information processing method comprising:

a first acquisition processing, including acquiring first brightness information relating to a pixel value of the first pixel from the first pixel;
a second acquisition processing, including acquiring second brightness information relating to a pixel value of the second pixel from the second pixel; and
a third acquisition processing, including acquiring distance information from the second pixel, the distance information relating to a distance between the image sensor and an object by which the infrared light is reflected.

**21.** A program designed to cause one or more processors to execute the information processing method of claim 20.

## FIG. 1 A

## FIG. 1 B

*FIG. 2*

Feedback Signal — Si1

Information Processing System — 1

| D3 — 13 Distance Information → 14 Noise Processor → 15 Coordinate Converter → 16 Separator → 17 3D Object Detector → 18 2D-3D Compositor → 19 Tracking Part → 27 Target Information — D11 |

D2 — 12 IR Brightness

21 First Composition Part → 20 2D Object Detector

D1 Light-Dark Brightness

11 Reference Information — D6

D4 Odometry

25 Free Space Detector

D12 Road Surface Information

D13 Free Space

22 Second Composition Part → 23 White Line Candidate Area Detector → 24 White Line Candidate Area Bird's Eye Converter → 26 Parking Frame Detector [ Pairing | Empty determination ] → D14 Empty Parking Frame

D5 conf

EP 3 995 858 A1

## FIG. 3

```
                START

S1   Acquire First Brightness
     Information

S2   Acquire Second Brightness
     Information

S3   Acquire Distance Information

S4   Remove Noise from Distance
     Information

S5   Separate Target Information
     and Road Surface Information


S6   < Object Detection Mode? >  ──No──┐
              │ Yes                     │
S7   3D Object Detection                │
              │                         │
S8   2D Object Detection                │
              │                         │
S9   2D-3D Composition                  │
              │                         │
S10  < Is Object Present? >  ──No──────┤
              │ Yes                     │
S11  Output Target Information          │
              │ ←───────────────────────┘
S12  < Parking Space Detection Mode? >  ──No──┐
              │ Yes                             │
S13  Detect White Line                         │
              │                                 │
S14  Detect Free Space                         │
              │                                 │
S15  < Is Parking Space Present? >  ──No───────┤
              │ Yes                             │
S16  Output Parking Frame                       │
     Information                                │
              │ ←──────────────────────────────┘
                END
```

FIG. 4

## FIG. 5

## FIG. 6

## FIG. 7

*FIG. 8 A*

A1

Ob1

61

*FIG. 8 B*

A1

M1

FIG. 9

EP 3 995 858 A1

FIG. 10

Feedback Signal — Si1 — 1D

Information Processing System

D3 — 13 Noise Processor (14) → Coordinate Converter (15) → Separator (16) → 3D Object Detector (17) → 2D-3D Compositor (18) → Tracking Part (19) → Target Information (27)

Distance Information (13)

D2 — 12 IR Brightness

D1 — Light-Dark Brightness

21 Composition Part

20 2D Object Detector

11 Reference Information — D6

D11

D12 Road Surface Information

Odometry — D4

25 Free Space Detector

D13 Free Space

23 White Line Candidate Area Detector → 24 White Line Candidate Area Bird's Eye Converter → 26 Parking Frame Detector [ Pairing | Empty determination ]

D14 Empty Parking Frame

D5 conf

EP 3 995 858 A1

*FIG. 11*

*FIG. 12 A*

Column Direction

3A

| W | W | W | W |
| IR | IR | IR | |
| W | W | W | W |
| | IR | IR | IR |

31
Row Direction
32
31
32

*FIG. 12 B*

Column Direction

3B

| W | W | W | W |
| W | W | W | W |
| IR | IR | IR | IR |
| W | W | W | W |

31
31
Row Direction
32
31

*FIG. 12 C*

Column Direction

3C

| IR | IR | IR | IR |
| IR | IR | IR | IR |
| W | W | W | W |
| IR | IR | IR | IR |

32
32
Row Direction
31
32

*FIG. 12 D*

Column Direction

3D

| W | IR | W | IR |
| IR | W | IR | W |
| W | IR | W | IR |
| IR | W | IR | W |

31
32
Row Direction
31
32

*FIG. 12 E*

Column Direction

3E

| R | G | R | G |
| IR | B | IR | B |
| R | G | R | G |
| IR | B | IR | B |

33
34
32
35
Row Direction

FIG. 13

Feedback Signal   Si1                                                          1B

Information Processing System

| D3 | 13 | 14 | 15 | 16 | 17 | 18 | 19 | 27 |
|----|----|----|----|----|----|----|----|----|

Distance Information → Noise Processor → Coordinate Converter → Separator → 3D Object Detector → 2D-3D Compositor → Tracking Part → Target Information

D11

IR Brightness  D2
12

Light-Dark Brightness  D1

20
2D Object Detector

11
Reference Information
D6

Odometry  D4

D12
Road Surface Information

25
Free Space Detector

D13
Free Space

22
Second Composition Part

23
White Line Candidate Area Detector

24
White Line Candidate Area Bird's Eye Converter

26
Parking Frame Detector
Pairing   Empty determination

D14
Empty Parking Frame

D5
conf

EP 3 995 858 A1

FIG. 14

Si1

1C

Information Processing System

| D3 | | | | | | | | 27 |
|---|---|---|---|---|---|---|---|---|

<table>
<tr><td colspan="2" align="center">**INTERNATIONAL SEARCH REPORT**</td><td>International application No.<br>PCT/JP2019/026866</td></tr>
</table>

**A. CLASSIFICATION OF SUBJECT MATTER**
Int.Cl. G01S17/89(2006.01)i, G01S17/32(2006.01)i

According to International Patent Classification (IPC) or to both national classification and IPC

**B. FIELDS SEARCHED**

Minimum documentation searched (classification system followed by classification symbols)
Int.Cl. G01S7/48-7/51, G01S17/00-17/95, G01C3/06, H04N5/3745

Documentation searched other than minimum documentation to the extent that such documents are included in the fields searched
Published examined utility model applications of Japan        1922-1996
Published unexamined utility model applications of Japan      1971-2019
Registered utility model specifications of Japan              1996-2019
Published registered utility model applications of Japan      1994-2019

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y<br>A | JP 2011-128024 A (SHARP CORPORATION) 30 June 2011,<br>paragraphs [0045]-[0094], fig. 1-8<br>(Family: none) | 1-8, 14-21<br>9-13 |
| Y<br>A | JP 2013-207415 A (OSAKA CITY UNIV.) 07 October<br>2013, paragraphs [0023]-[0050], fig. 1-8<br>(Family: none) | 1-8, 14-21<br>9-13 |

☒ Further documents are listed in the continuation of Box C.          ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>19.09.2019 | Date of mailing of the international search report<br>01.10.2019 |
|---|---|
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

EP 3 995 858 A1

**INTERNATIONAL SEARCH REPORT**

International application No.

PCT/JP2019/026866

C (Continuation).    DOCUMENTS CONSIDERED TO BE RELEVANT

| Category* | Citation of document, with indication, where appropriate, of the relevant passages | Relevant to claim No. |
|---|---|---|
| Y<br>A | WO 2013/035612 A1 (NEC CORPORATION) 14 March 2013, paragraphs [0023]-[0059], fig. 1<br>(Family: none) | 3-8, 14-19<br>9-13 |
| Y<br>A | JP 2015-87267 A (NISSAN MOTOR CO., LTD.) 07 May 2015, paragraphs [0008]-[0014], fig. 1<br>(Family: none) | 6-8, 14-19<br>9-13 |
| Y<br>A | JP 2018-36102 A (SONY SEMICONDUCTOR SOLUTIONS CORP.) 08 March 2018, paragraphs [0120]-[0126], fig. 20, 21<br>& WO 2018/042887 A1 & US 2018/0292206 A1, paragraphs [0155]-[0161], fig. 20, 21 & CN 108139484 A | 8, 14-19<br>9-13 |
| Y<br>A | JP 2016-156913 A (NIPPON SIGNAL CO., LTD.) 01 September 2016, paragraphs [0051]-[0057], fig. 1<br>(Family: none) | 17-19<br>9-13 |
| A | US 2014/0098192 A1 (SAMSUNG ELECTRONICS CO., LTD.) 10 April 2014, paragraphs [0053]-[0067], fig. 1-5D<br>& US 2017/0244953 A1 & KR 10-2014-0046335 A | 1-21 |

Form PCT/ISA/210 (continuation of second sheet) (January 2015)

41

**EP 3 995 858 A1**

## REFERENCES CITED IN THE DESCRIPTION

**Patent documents cited in the description**

- JP 2005077385 A